# EUROPEAN PATENT SPECIFICATION

(11) **EP 2 816 864 B1**
(45) Date of publication and mention of the grant of the patent: **17.08.2016**
(21) Application number: 13810753.7
(22) Date of filing: 20.06.2013
(51) Int. Cl.: H04W 4/00, H04W 68/02, H04W 76/02

(54) **INFORMATION TRANSMISSION METHOD, SYSTEM AND DEVICE**
INFORMATIONSÜBERTRAGUNGSVERFAHREN, -SYSTEM UND -VORRICHTUNG
PROCÉDÉ, SYSTÈME ET DISPOSITIF DE TRANSMISSION D'INFORMATIONS

(30) Priority: 25.06.2012 CN 201210211813; 30.06.2012 CN 201210223391
(43) Date of publication of application: 24.12.2014
(73) Proprietor: Huawei Device Co., Ltd., Longgang District Shenzhen Guangdong 518129 (CN)
(72) Inventor: JIN, Hui, Shenzhen Guangdong 518129 (CN); YI, Qiang, Shenzhen Guangdong 518129 (CN); LI, Na, Shenzhen Guangdong 518129 (CN)
(74) Representative: Gill Jennings & Every LLP
(86) International application number: PCT/CN2013/077511
(87) International publication number: WO 2014/000594

(56) References cited:
- WO-A2-2011/112051
- CN-A- 102 118 859
- CN-A- 102 196 563
- CN-A- 102 340 754
- 3GPP: "3rd Generation Partnership Project; Technical Specification Group Services and System Aspects; System Improvements for Machine-Type Communications (Release 11)", 3GPP DRAFT; 23888-161, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 14 March 2012 (2012-03-14), XP050625453, [retrieved on 2012-03-14]
- "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.2.0, 15 June 2012 (2012-06-15), pages 1-285, XP050580724, [retrieved on 2012-06-15]
- ZTE: "Device Triggering for offline MTC device", 3GPP DRAFT; S2-112330, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Xi'An; 20110516, 11 May 2011 (2011-05-11), XP050525351, [retrieved on 2011-05-11]
- CHINA MOBILE: "Solicit-response signalling solution for Low Data Usage", 3GPP DRAFT; S2-100294_SOLICIT-RESPONSE SIGNALLING SOLUTION FOR LOW DATA USAGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen, China; 20100118 - 20100122, 12 January 2010 (2010-01-12), XP050630474, [retrieved on 2010-01-12]
- NEC CORPORATION: "pCR: MTC-IWF based security solution for small data transmission", 3GPP DRAFT; S3-130525, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Valencia, Spain; 20130408 - 20130412 14 April 2013 (2013-04-14), XP050709756, Retrieved from the Internet: URL:http://www.3gpp.org/ftp/tsg_sa/WG3_Sec urity/TSGS3_71_Valencia/Docs/ [retrieved on 2013-04-14]
- MEDIATEK INC. EVALUATION ON MTC DEVICE TRIGGER SOLUTIONS. 3GPP TSG SA WG2 MEETING #86, S2-113239 July 2011, XP050548542

## Description

### TECHNICAL FIELD

The present invention relates to a communications technology, and in particular, to a method, a system, and a device for transmitting information.

### BACKGROUND

Machine type communication (Machine Type Communication, MTC for short) devices are widely applied in various industries in the society. An MTC device needs to communicate with a corresponding service capability server (Services Capability Server, SCS). Because an Internet Protocol (Internet Protocol, IP for short) address of the MTC device is an internal IP address and is valid only in a time period, in order for the SCS to know the IP address of the MTC device in real time, the MTC device needs to maintain an IP connection with the SCS periodically, which causes a heavy burden to the network.

With respect to the foregoing problem, the prior art puts forward a solution in which the SCS and the MTC device do not need to maintain a connection in real time, that is, when the SCS has data to send to the MTC device, the data is sent to the MTC device by trigger (Trigger). The process of sending data by the SCS by trigger to the MTC device includes: sending, by the SCS, a trigger request message to a machine type communications-interworking function entity MTC-IWF (Machine Type Communications-InterWorking Function, MTC-IWF for short); sending, by the MTC-IWF after receiving the trigger request message, a submit trigger request (Submit Trigger request) message to a mobility management entity (Mobility Management Entity, MME for short) or a serving GRPS support node (Serving GPRS Support Node, SGSN for short); storing, by the MME or the SGSN, the submit trigger request message, and waiting for a location update request message sent by the MTC device; returning, by the MME or the SGSN, a location update accept message, and carrying content of the submit trigger request message in the location update accept message; and sending, by the MTC device, a location update complete message, and establishing a data connection with the SCS according to the content of the submit trigger request message carried in the location update accept message. However, the foregoing technical solution has a problem of a poor real-time effect

3GPP TR 23.888 v 1.6.1 describes an architecture for supporting MTC devices.

CN 102 340 754 A describes approaches in MTC communications.

### SUMMARY

The present invention provides a method, a system, and a device for transmitting information, which are used to improve the real-time effect when an SCS sends data to an MTC device by trigger.

In a first aspect, there is provided a method for transmitting information, comprising:
receiving a first request message, wherein the first request message comprises first information, wherein the first information is trigger information and/or small data;
sending a paging message to a terminal device;
receiving a second request message that is sent by the terminal device according to the paging message; and
sending the first information to the terminal device after receiving the second request message;
wherein the sending the first information to the terminal device after receiving the second request message comprises:
   if the second request message is a service request message, sending a service reject message to the terminal device, and a first cause value is carried in the service reject message, so that the terminal device learns, according to at least the first cause value, that the core network management entity has the first information to send to the terminal device; and
   sending the first information to the terminal device by using a downlink generic NAS transport message or a downlink NAS transport message.

In a second aspect, there is provided a method for receiving information, comprising:
receiving a paging message, wherein the paging message carries indication information;
sending a second request message to a core network management entity according to at least the indication information; and
receiving first information sent by the core network management entity, wherein the first information is trigger information and/or small data;
wherein the receiving the first information comprises:
   if the second request message is a service request message, receiving a service reject message, and a first cause value is carried in the service reject message;
   determining, according to at least the first cause value, that the core network management entity has the first information to be sent; and
   receiving the first information via a downlink generic NAS transport message or a downlink NAS transport message.

In a third aspect, there is provided a core network management entity, comprising:
a first receiving module, configured to receive a first request message, wherein the first request message comprises first information, wherein the first information is trigger information and/or small data;
a first sending module, configured to send a paging message to a terminal device after the first receiving module receives the first request message;
a second receiving module, configured to receive, after the first sending module sends the paging message, a second request message that is sent by the terminal device according to the paging message; and
a second sending module, configured to send the first information to the terminal device after the second receiving module receives the second request message;
wherein sending, by the second sending module, the first information to the terminal device after receiving the second request message comprises:
   if the second request message is a service request message, sending a service reject message to the terminal device, and a first cause value is carried in the service reject message, so that the terminal device learns, according to at least the first cause value, that the core network management entity has the first information to send to the terminal device; and
   sending the first information to the terminal device by using a downlink generic NAS transport message or a downlink NAS transport message.

In a fourth aspect, there is provided a terminal device, comprising:
a third receiving module, configured to receive a paging message, wherein the paging message carries indication information;
a third sending module, configured to send a second request message to a core network management entity according to at least the indication information received by the third receiving module; and
a fourth receiving module, configured to receive, after the third sending module sends the second request message, first information sent by the core network management entity, wherein the first information is trigger information and/or small data;
wherein the receiving, by the fourth receiving module, the first information comprises:
   if the second request message is a service request message, receiving a service reject message, and a first cause value is carried in the service reject message;
   determining, according to at least the first cause value, that the core network management entity has the first information to be sent; and
   receiving the first information via a downlink generic NAS transport message or a downlink NAS transport message.

By using the method for transmitting information and the core network management entity provided in one aspect, the core network management entity sends a paging message to a terminal device after receiving a first request message including first information, so that the terminal device sends a second request message timely according to the paging message; and after receiving the second request message, sends the first information in the first request message to the terminal device, where the first information is trigger information and/or small data. Compared with the solution in the prior art where the core network management entity waits for a location update request message actively sent by the terminal device and sends the first information in the first request message to the terminal device after receiving the location update request message, the core network management entity does not need to wait for the location update request message actively sent by the terminal device, and can send the first request message to the terminal device timely, thereby improving the real-time effect of sending information to the terminal device.

By using the method for receiving information and the terminal device provided in another aspect, the terminal device receives a paging message sent by a core network management entity, where the paging message carries indication information, so that the terminal device is instructed to send a second request message to the core network management entity according to at least the indication information; the terminal device can timely send the second request message to the core network management entity according to the indication information, and then receive first information sent by the core network management entity according to the second request message, where the first information is trigger information and/or small data. Compared with the technical solution in the prior art, the terminal device does not need to wait to send a location update request message, and can timely obtain the first information from the core network management entity, thereby improving the real-time effect of obtaining the first information.

By using the method for transmitting information and the core network management entity provided in another aspect, after receiving a first request message including first information, the core network management entity determines, according to a first time in the first request message, whether it is necessary to immediately send the first information to a terminal device; and if not, waits for a location update request message sent by the terminal device, and sends the first information to the terminal device after receiving the location update request message, where the first information is trigger information and/or small data. Compared with the technical solution in the prior art, by determining whether it is necessary to immediately send the first information, the core network management entity waits, only when it is unnecessary to immediately send the first information, to receive the location update request message actively sent by the terminal device. This helps to ensure that the first information can be timely sent to the terminal device, and improve the real-time effect of obtaining the first information by the terminal device.

By using the method for receiving information and the terminal device provided in another aspect, the terminal device actively sends a location update request message to a core network management entity, receives a location update accept message that is sent by the core network management entity after receiving the location update request message, and receives a downlink generic NAS transport message or a downlink NAS transport message sent by the core network management entity, where the downlink generic NAS transport message or the downlink NAS transport message carries first information, where the first information is trigger information and/or small data. This solves the transmission problem of large data and improves the real-time effect of obtaining the first information by the terminal device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a method for transmitting information according to an embodiment of the present invention;
FIG. 2 is a flowchart of a method for transmitting information according to another embodiment of the present invention;
FIG. 3 is a flowchart of an implementation manner of step 205 according to an embodiment of the present invention;
FIG. 4 is a flowchart of a method for receiving information according to an embodiment of the present invention;
FIG. 5 is a flowchart of a method for receiving information according to another embodiment of the present invention;
FIG. 6A is a flowchart of a method for transmitting information according to another embodiment of the present invention;
FIG. 6B is a flowchart of a method for receiving information according to another embodiment of the present invention;
FIG. 6C is a flowchart of a method for receiving information according to another embodiment of the present invention;
FIG. 6D is a flowchart of a specific implementation manner of a method for transmitting data according to an embodiment of the present invention;
FIG. 7 is a flowchart of a specific implementation manner of a method for transmitting data according to another embodiment of the present invention;
FIG. 8 is a flowchart of a specific implementation manner of a method for transmitting data according to another embodiment of the present invention;
FIG. 9A is a schematic structural diagram of a core network management entity according to an embodiment of the present invention;
FIG. 9B is a schematic structural diagram of a core network management entity according to another embodiment of the present invention;
FIG. 9C is a schematic structural diagram of a core network entity according to another embodiment of the present invention;
FIG. 10A is a schematic structural diagram of a terminal device according to an embodiment of the present invention;
FIG. 10B is a schematic structural diagram of a terminal device according to another embodiment of the present invention;
FIG. 10C is a schematic structural diagram of a terminal device according to another embodiment of the present invention;
FIG. 11A is a schematic structural diagram of a core network management entity according to another embodiment of the present invention;
FIG. 11B is a schematic structural diagram of a core network management entity according to another embodiment of the present invention;
FIG. 12A is a schematic structural diagram of a terminal device according to another embodiment of the present invention;
FIG. 12B is a schematic structural diagram of a terminal device according to another embodiment of the present invention;
FIG. 12C is a schematic structural diagram of a terminal device according to another embodiment of the present invention;
FIG. 12D is a schematic structural diagram of a terminal device according to another embodiment of the present invention; and
FIG. 12E is a schematic structural diagram of a terminal device according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

First it is noted that the terminal device in the following embodiments of the present invention may be an MTC device or a user equipment (User Equipment, UE for short), but is not limited thereto.

It should be understood that the ordinal numbers such as "first" and "second", when mentioned in the embodiments of the present invention, are only used for distinguishing, unless the ordinal numbers definitely represent an order according to the context.

The following methods for transmitting information according to the present invention may be executed by a core network management entity, where the core network management entity may be an MME or an SGSN, but is not limited thereto.

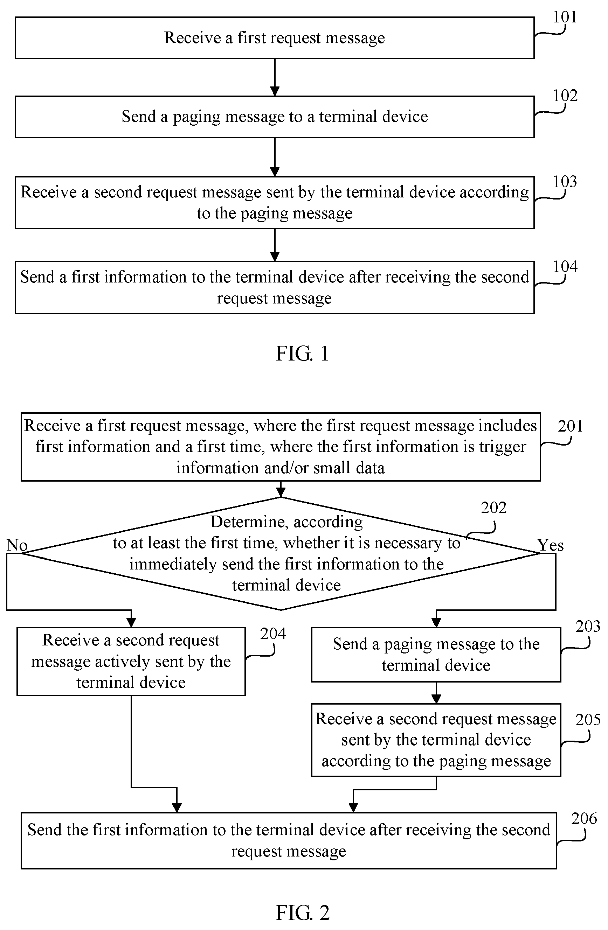

FIG. 1 is a flowchart of a method for transmitting information according to an embodiment of the present invention. As shown in FIG. 1, the method in this embodiment includes:
Step 101: Receive a first request message.

When an SCS has data to send to a terminal device, the SCS sends first information to an MTC-IWF, where the first information may be a trigger request (English: trigger request) message, but is not limited thereto. The first information includes information such as an identifier of the terminal device, an identifier of the SCS, and a response time of the first information. The response time is used to instruct the terminal device whether to initiate a connection (which mainly means initiating a connection to the SCS through a core network management entity) to a network side immediately or initiate a connection after waiting for a time period, after the terminal device receives the first information. The MTC-IWF verifies validity of the trigger request message, and if the trigger request message is valid, queries for a core network management entity corresponding to the terminal device, for example, an MME or an SGSN, and sends a first request message to the core network management entity. The first request message is generated by the MTC-IWF according to the first information, and includes the first information. The core network management entity receives the first request message sent by the MTC-IWF.

In an optional implementation manner of this embodiment, the first information sent by the SCS to the MTC-IWF may be trigger information (English: trigger payload or trigger information) triggering the terminal device and the SCS or a network-side application server (Application Server) to establish a data connection when the SCS has data to send to the terminal device.

In an optional implementation manner of this embodiment, the first information sent by the SCS to the MTC-IWF may also be small data that the SCS needs to send to the terminal device. Herein the small data (English: small data) is a concept used in a 3GPP standard, for example, mentioned in 3GPP TR 23.888. This concept refers to data of a small data amount, which usually does not exceed 1K bytes, and does not exceed 2K bytes at most.

In an optional implementation manner of this embodiment, the first information sent by the SCS to the MTC-IWF may include both the trigger information and the small data.

As seen above, content of the first information included in the first request message may be different, and may be trigger information and/or small data.

Step 102: Send a paging (English: paging) message to the terminal device.

In this embodiment, after receiving the first request message, the core network management entity actively sends a paging message to the terminal device, unlike the prior art where the core network management entity waits for a location update request actively initiated by the terminal device, so that the terminal device can initiate an information reception request to the core network management entity timely according to the paging message.

Step 103: Receive a second request message that is sent by the terminal device according to the paging message.

The terminal device sends a second request message to the core network management entity after receiving the paging message, so as to request the core network management entity to send the first information to the terminal device. Herein the second request message may be a service request (English: Service Request) message.

In an optional implementation manner of this embodiment, the paging message sent by the core network management entity carries indication information, so that the terminal device sends the second request message to the core network management entity according to at least the indication information. Accordingly, the terminal device may specifically send the second request message to the core network management entity according to the indication information carried in the paging message, so as to request obtaining of the first information. Herein the indication information is used to indicate to the terminal that the core network management entity has trigger information and/or small data to send to the terminal. Specifically, after receiving the paging message sent by the core network management entity, the terminal device obtains the indication information from the paging message, and knows, according to the indication information, that the core network management entity needs to send the first information. Therefore, the terminal device actively sends the second request message to the core network management entity, so as to timely request obtaining of the first information from the core network management entity. Herein the second request message may be a service request message or a location update request message, where the location update request message may be a tracking area update (Tracking Area Update, TAU for short) request message or a routing area update (Routing Area Update, RAU for short) request message.

In an optional implementation manner of this embodiment, a manner of carrying the indication information in the paging message may be: extending a core network domain (English: CN Domain) field in the paging message, and carrying the indication information in the extended CN Domain field.

In another implementation manner of this embodiment, a manner of carrying the indication information in the paging message may be: adding a field to the paging message, and carrying the indication information in the newly added field.

The information exchanged between the core network management entity and the terminal device needs to pass through a base station, and the base station is mainly used as a relay in the information exchange process. Therefore, the base station is not mentioned in the embodiments of the present invention. It is understandable to persons skilled in the art that the information exchanged between the core network management entity and the terminal device needs to pass through the base station.

As seen above, the manner of requesting obtaining of the first information by the terminal device from the core network management entity in this embodiment is different from the manner in the prior art where the terminal device can obtain, only when the terminal device needs to report a location update request message, the first information sent by the core network management entity. Because the terminal device sends a location update request message only when a condition is met, the core network management entity may send the first information to the terminal device after waiting for a long time. However, in this embodiment, the core network management entity only needs to send a paging message to the terminal device when having information to transmit, so that the terminal device knows that the core network device has information to send and further sends a second request message to the core network device, and then the core network management entity sends the first information to the terminal device. This improves timeliness of sending the first information to the terminal device.

Step 104: Send the first information to the terminal device after receiving the second request message.

After receiving the second request message, the core network management entity sends the first information to the terminal device.

In an optional implementation manner of this embodiment, if the second request message is a location update request message, the core network management entity may send the first information to the terminal device by using a location update accept message; or if the second request message is a service request message, send the first information to the terminal device by using a service reject (English: Service Reject) message. The service reject message may carry a second cause value (English: Cause Value), where the second cause value is used to notify the terminal device that the service reject message carries the first information or the core network management entity has trigger information and/or small data to send to the terminal. After receiving the service reject message carrying the second cause value, the terminal device may further parse the service reject message to obtain the first information, and send an acknowledgment message to the core network management device by using an uplink generic NAS (Non Access Stratum non access stratum) transport message (English: UPLINK GENERIC NAS TRANSPORT message) or uplink NAS transport information (English: Uplink NAS Transport), so as to notify the core network management entity that the terminal device has received the first information. The location accept message may be a TAU accept message or an RAU accept message.

As seen above, in this embodiment, after receiving a first request message including first information, a core network management entity actively sends a paging message to a terminal device, unlike the prior art where the core network management entity waits for a location update request message sent by the terminal device. In this way, the terminal device sends a second request message to the core network management entity timely according to the paging message, and the core network management entity can send the first information to the terminal device timely after receiving the second request message. Compared with the solution in the prior art where the core network management entity waits for a location update request message actively sent by the terminal device and sends the first information to the terminal device after receiving the location update request message, in this embodiment, the core network management entity does not need to wait for a location update request message actively sent by the terminal device and can timely send the first information to the terminal device, thereby improving the real-time effect of sending the first information to the terminal device.

FIG. 2 is a flowchart of a method for transmitting information according to another embodiment of the present invention. As shown in FIG. 2, the method in this embodiment includes:
Step 201: Receive a first request message, where the first request message includes first information and a first time, where the first information is trigger information and/or small data.

In this embodiment, the first request message further carries a first time in addition to the first information. The first time is a validity period (English: valid period or valid time) of the first request message, or is a validity period of the first information, or is a validity period for sending the first information to a terminal device, or is a response time in the first information, where the response time is a validity period in which a terminal device is required to initiate a connection to a core network management entity after receiving the first information. No matter which one of the foregoing validity periods the first time is, an urgency degree of the first information may be indicated by the first time. For example, if the first time is smaller than a preset time threshold, it indicates that the first information is relatively urgent, and needs to be sent to the terminal device timely; otherwise, it indicates that the first information is not urgent, and does not need to be sent to the terminal device timely.

The foregoing validity periods may be a time segment, for example, 3 minutes or 3 hours, or may also be a time point, for example, a specific hour, minute, or second, in a day of a month of a year, or may be an indication indicating an urgency degree, for example, urgent or not urgent.

In this embodiment, specific values of the validity period and preset time threshold are not limited, which may be determined according to an actual application requirement.

Other description of step 201 is not given herein. For details, reference may be made to step 101.

Step 202: Determine, according to at least the first time, whether it is necessary to immediately send the first information to the terminal device, and if a determining result is yes, perform step 203, or if a determining result is no, perform step 204.

After receiving the first request message, the core network management entity obtains the first time from the first request message, and then determines, according to the first time, whether it is necessary to immediately send the first information to the terminal device. For example, the core network management entity may compare the first time and the preset time threshold, and determine the urgency degree of the first information. When it is determined that the first time is smaller than the preset time threshold, it indicates that the first information is urgent, and needs to be sent to the terminal device timely. Therefore, the core network management entity actively sends a paging message to the terminal device, that is, performs step 203. When it is determined that the first time is greater than or equal to the preset time threshold, it indicates that the first information is not urgent. Therefore, the core network management entity may not actively send a paging message to the terminal device, but waits for a second request message actively sent by the terminal device, that is, performs step 204.

It is noted herein that when determining that the first information is not urgent, the core network management entity may also actively send a paging message to the terminal device, which can also improve the real-time effect of obtaining the first information by the terminal device, without necessarily using a solution similar to that in the prior art.

Step 203: Send a paging message to the terminal device, and then perform step 205.

Step 203 is not further described herein. For details, reference may be made to step 103.

Step 204: Receive a second request message actively sent by the terminal device, and then perform step 206.

When determining that it is unnecessary to immediately send the first information to the terminal device, the core network management entity does not actively send a paging message to the terminal device, but waits for a second request message actively sent by the terminal device. This can reduce the signaling exchange between the core network management entity and the terminal device, and help to save network resources. Preferably the second request message herein is a location update request message.

Step 205: Receive a second request message that is sent by the terminal device according to the paging message, and then perform step 206.

Step 205 is not further described herein. For details, reference may be made to step 103.

Step 206: Send the first information to the terminal device after receiving the second request message.

In an optional implementation manner of this embodiment, if the second request message is a location update request message, the core network management entity may send the first information to the terminal device by using a location update accept message; or if the second request message is a service request message, send the first information to the terminal device by using a service reject (English: Service Reject) message. The service reject message may carry a second cause value (English: Cause Value), where the second cause value is used to notify the terminal device that the service reject message carries the first information or the core network management entity has trigger information and/or small data to send to the terminal. After receiving the service reject message carrying the second cause value, the terminal device may further parse the service reject message to obtain the first information, and send an acknowledgment message to the core network management device by using an uplink generic NAS transport message (English: UPLINK GENERIC NAS TRANSPORT message) or uplink NAS transport information, so as to notify the core network management entity that the terminal device has received the first information. The location accept message may be a TAU accept message or an RAU accept message.

As seen above, in this embodiment, a core network management entity determines a urgency degree of first information according to a first time carried in a first request message, that is, determines whether it is necessary to immediately send the first information to a terminal device; and when determining that the first information is relatively urgent, actively sends a paging message to the terminal device, so that the terminal device can timely know that the core network management entity has information to send and further timely send a second request message to the core network management entity. However, when the core network management entity determines that it is unnecessary to immediately send the first information to the terminal device, a solution similar to that in the prior art may be used: The core network management entity waits for a second request message actively sent by the terminal device, and then sends the first information to the terminal device. This helps to reduce the signaling exchange between the core network management entity and the terminal device, and helps to save network resources.

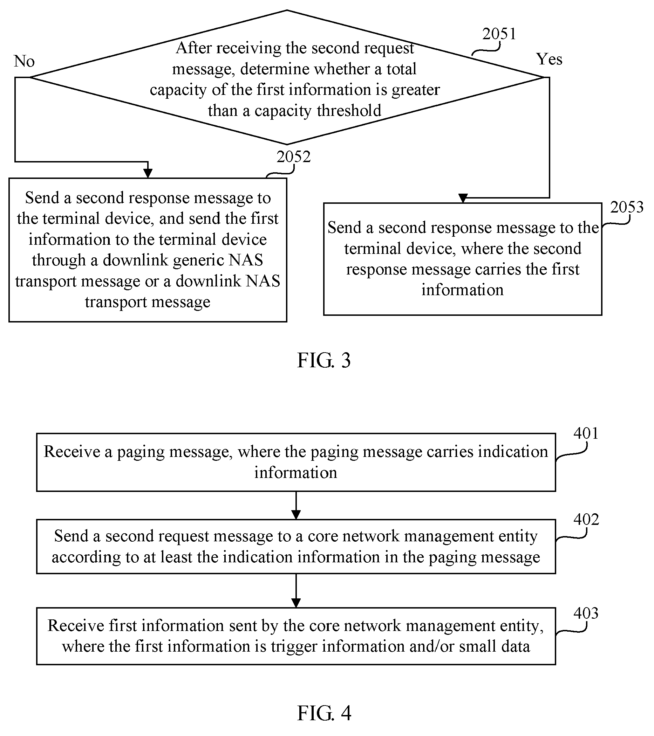

FIG. 3 is a flowchart of another implementation manner of step 205 according to an embodiment of the present invention. As shown in FIG. 3, this implementation manner includes:
Step 2051: After receiving the second request message, determine whether a total capacity of the first information is greater than a capacity threshold; and if a determining result is yes, perform step 2052; or otherwise, perform step 2053.
Step 2052: Send a second response message to the terminal device, and send the first information to the terminal device by using a downlink generic NAS transport message (English: DOWNLINK GENERIC NAS TRANSPORT message) or a downlink NAS transport information (English: Downlink NAS Transport) message.
Step 2053: Send a second response message to the terminal device, where the second response message carries the first information.

The second request message and the second response message are signaling-plane messages, and transmission traffic thereof is usually small. If the capacity of the first information is large, the first information cannot be carried by using a signaling-plane message.

On this basis, in this embodiment, before the core network management entity sends the first information to the terminal device after receiving the second request message, the core network management entity compares the total capacity of the first information with the capacity threshold, and determines whether the total capacity of the first information is greater than the capacity threshold.

If the determining result is yes, it indicates that the total capacity of the first information is large. To successfully send the first information to the terminal device, the core network management entity sends a second response message to the terminal device, and sends the first information to the terminal device by using a downlink generic NAS transport message or downlink NAS transport information.

If the determining result is no, it indicates that the total capacity of the first information is small, and therefore the core network management entity sends only a second response message to the terminal device, and sends the first information to the terminal device by using the second response message. This can reduce the signaling exchange between the core network management entity and the terminal device, and help to save network resources.

If the second request message is a service request message, the second response message is a service reject message; and if the second request message is a TAU or RAU request message, the second response message is a TAU or RAU accept message.

If the second response is a service reject message, and the first information is sent to the terminal device by using a downlink generic NAS transport message or downlink NAS transport information, the service reject message may carry a first cause value, so that the terminal device learns, according to at least the first cause value, that the core network management entity has the first information to send to the terminal device. The first cause value is used to notify the terminal device that the core network management entity has trigger information and/or small data to send to the terminal, so that the terminal device waits to receive the first information instead of releasing a NAS connection. If the second response is a service reject message, and the first information is sent to the terminal device by using the service reject message, the service reject message may carry a second cause value, so that the terminal device knows, according to at least the second cause value, that the service reject message includes the first information. For the foregoing two cases, the terminal device may further obtain the first information by parsing, and send an acknowledgement message to the core network management device by using an uplink generic NAS transport message or uplink NAS transport information, so as to notify the core network management entity that the terminal device has received the first information.

It is noted herein that the capacity threshold in the embodiments of the present invention may be preset and its specific value is not limited. Using an example for description, the capacity threshold may be determined according to the capacity of the second response message, for example, the capacity of the data allowed to be carried by the second response message may be used as the capacity threshold.

In an optional implementation manner of this embodiment, when the first information is sent to the terminal device, a content type identifier of the first information may be further sent to the terminal device, where the content type identifier of the first information includes a trigger information type identifier and/or a small data type identifier. If the first information is trigger information, the content type identifier of the first information is a trigger information type; if the first information is small data, the content type identifier of the first information is a small data type identifier; or if the first information is trigger information and small data, the content type identifier of the first information includes a trigger information type identifier and a small data type identifier.

Optionally, the core network management entity may add the content type identifier of the first information to the downlink generic NAS transport message or the downlink NAS transport message or to the second response message carrying the first information, and send the message to the terminal device. That is, the downlink generic NAS transport message or the downlink NAS transport message or the second response message carrying the first information further carries the content type identifier of the first information in addition to the first information. The core network management entity sends the content type identifier of the first information to the terminal device, so that the terminal device can know content of the received first information, and the terminal device can perform a subsequent operation in a correct processing manner.

The downlink generic NAS transport message or the downlink NAS transport message may carry the content type identifier of the first information by using a generic message container type (English: Generic Message Container Type) field of the message, which is not limited.

First it is noted that the following methods for receiving information according to the present invention may be executed by a terminal device, for example, an MTC device or a UE.

FIG. 4 is a flowchart of a method for receiving information according to an embodiment of the present invention. As shown in FIG. 4, the method in this embodiment includes:
Step 401: Receive a paging message, where the paging message carries indication information.

After receiving a first request message including first information, a core network management entity actively sends a paging message to a terminal device to timely send the first information to the terminal device. The terminal device receives the paging message sent by the core network management entity. The paging message carries indication information, which is used to indicate to the terminal device that the core network management entity needs to send information.

The first information is trigger information and/or small data. The process of receiving a first request message by the core network management entity is not further described herein. For details, reference may be made to step 101.

Step 402: Send a second request message to the core network management entity according to at least the indication information in the paging message.

Specifically, after receiving the paging message, the terminal device obtains the indication information from the paging message, knows, according to the indication information, that the core network management entity has information to transmit, and therefore, sends a second request message to the core network management entity, so as to request the core network management entity to send information to be transmitted. Herein the second request message may be a service request message or a location update request message, where the location update request message may be a TAU request message or an RAU request message.

Step 403: Receive first information sent by the core network management entity, where the first information is trigger information and/or small data.

After receiving the second request message sent by the terminal device, the core network management entity sends the first information in the first request message to the terminal device.

Optionally, before sending the first information to the terminal device, the core network management entity may determine whether a total capacity of the first information is larger than a capacity threshold. If a determining result is yes, it indicates that the capacity of the first information is large, and therefore the first information may be sent to the terminal device by using a downlink generic NAS transport message or a downlink NAS transport message. Otherwise, it indicates that the capacity of the first information is small, and therefore the first information may be sent to the terminal device by using a second response message.

Based on the foregoing, in an optional implementation manner of this embodiment, step 403 may be specifically: receiving a second response message sent by the core network management entity, and receiving a downlink generic NAS transport message or a downlink NAS transport message sent by the core network management entity, where the downlink generic NAS transport message or the downlink NAS transport message carries the first information.

In another optional implementation manner of this embodiment, step 403 is specifically: receiving a second response message sent by the core network management entity, where the second response message carries the first information.

The second response message may be a service reject message or a location update accept message, where the location update accept message may be a TAU accept message or an RAU accept message.

If the second response is a service reject message, the service reject message may carry a first cause value (English: Cause Value), and the terminal device learns, according to at least the first cause value, that the core network management entity has the first information to send to the terminal device. The terminal device waits, according to at least the first cause value, to receive the first information, instead of releasing a NAS connection. Further, optionally, the terminal device receives a content type identifier of the first information sent by the core network management entity when receiving the first information, where the content type identifier of the first information includes a trigger information type identifier and/or a small data type identifier. If the first information is trigger information, the content type identifier of the first information is a trigger information type; if the first information is small data, the content type identifier of the first information is a small data type identifier; or if the first information is trigger information and small data, the content type identifier of the first information includes a trigger information type identifier and a small data type identifier.

Optionally, the core network management entity may send the content type identifier of the first information to the terminal device by using the downlink generic NAS transport message or the downlink NAS transport message or the second response message carrying the first information. That is, the downlink generic NAS transport message or the downlink NAS transport message or the second response message carrying the first information, received by the terminal device, further carries the content type identifier of the first information.

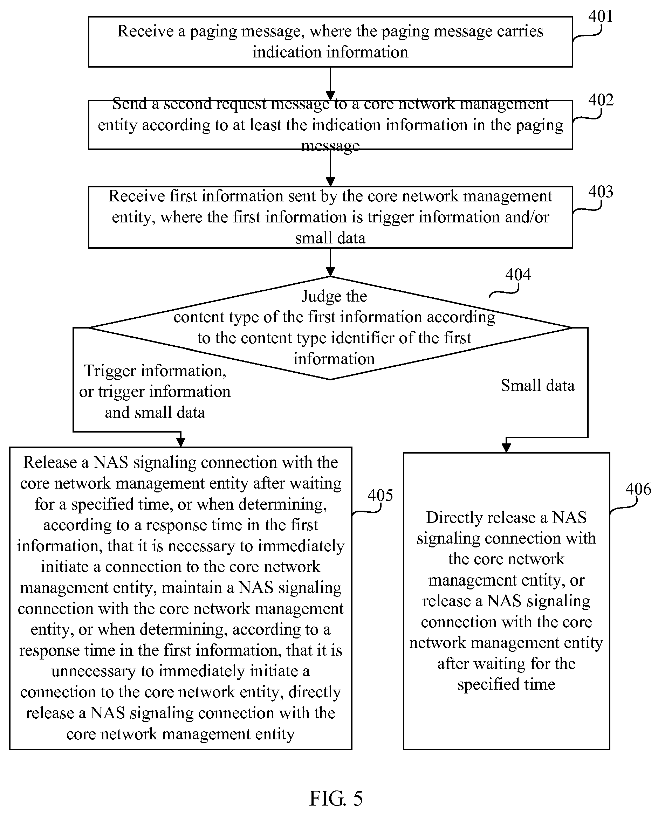

Based on the foregoing, in an optional implementation manner of this embodiment, as shown in FIG. 5, after step 403, the method further includes:
Step 404: Determine the content type of the first information according to the content type identifier of the first information; and if determining that the first information is trigger information or is trigger information and small data, perform step 405; or if determining that the first information is small data, perform step 406.
Step 405: Release a NAS signaling connection with the core network management entity after waiting for a specified time, or when determining, according to a response time in the first information, that it is necessary to immediately initiate a connection to the core network management entity, maintain a NAS signaling connection with the core network management entity, or when determining, according to a response time in the first information, that it is unnecessary to immediately initiate a connection to the core network entity, directly release a NAS signaling connection with the core network management entity. Two methods are available for the terminal device to release the NAS signaling connection with the core network management entity: The terminal device directly sends a release message to the core network management entity; or the terminal device sends a release request to the core network management entity, and the core network management entity sends a release message.

The specified time may be timed by a timer, where the timer may be a timer T3440, which is not limited.

The trigger information may require the terminal device to immediately initiate a connection to the core network management entity after receiving the trigger information, to establish a data connection with an SCS, or may not require the terminal device to immediately initiate a connection to the core network management entity after receiving the trigger information. Therefore, if the first information includes trigger information, the timer T3440 may be started for timing. The NAS signaling connection with the core network management entity is released after the specified time expires, instead of being released directly. This helps to meet the requirement of the trigger information that requires the terminal device to immediately initiate a connection to the core network management entity after receiving the trigger information. Two methods are available for the terminal device to release the NAS signaling connection with the core network management entity: The terminal device directly sends a release message to the core network management entity; or the terminal device sends a release request to the core network management entity, and the core network management entity sends a release message. In this implementation manner, the terminal device can complete the connection with the SCS through the core network management entity within the time period timed by the timer. The specified time is usually 10s, but is not limited thereto.

In addition to the foregoing manner, the first information usually carries a response time, where the response time is a validity period in which the terminal device is required to initiate a connection to the core network management entity after receiving the first information. According to the response time, it may be determined whether the terminal device is required to immediately initiate a connection to the core network management entity. Therefore, when the first information includes trigger information, a determining may be further performed according to the response time in the first information. When it is determined, according to the response time in the first information, that it is necessary to immediately initiate a connection to the core network device, the NAS signaling connection with the core network management entity is maintained. Otherwise, the NAS signaling connection with the core network management entity is directly released. Two methods are available for the terminal device to release the NAS signaling connection with the core network management entity: The terminal device directly sends a release message to the core network management entity; or the terminal device sends a release request to the core network management entity, and the core network management entity sends a release message. This manner not only helps to improve timeliness of establishing a NAS signaling connection with the core network management entity and further establishing a data connection with the SCS, but also helps to save connection resources between the core network management entity and the terminal device.

Step 406: Directly release a NAS signaling connection with the core network management entity, or release a NAS signaling connection with the core network management entity after waiting for the specified time.

If it is determined that the first information does not include trigger information but includes only small data, the NAS signaling connection with the core network management entity may be directly released, which helps to save connection resources between the core network management entity and the terminal device. The NAS signaling connection with the core network management entity may also be released after waiting for the specified time, which helps to ensure timeliness of establishing a connection when the terminal device needs to establish a data connection with the SCS through the core network management entity. As seen above, in this embodiment, after receiving a paging message that is sent by a core network management entity and carries indication information, a terminal device can timely send a second request message to the core network management entity, and receive first information that is sent by the core network management entity after receiving the second request message. Compared with the prior art, the terminal device does not need to wait to send a location update request message, and can timely obtain the first information from the core network management entity, thereby improving the real-time effect of obtaining the first information.

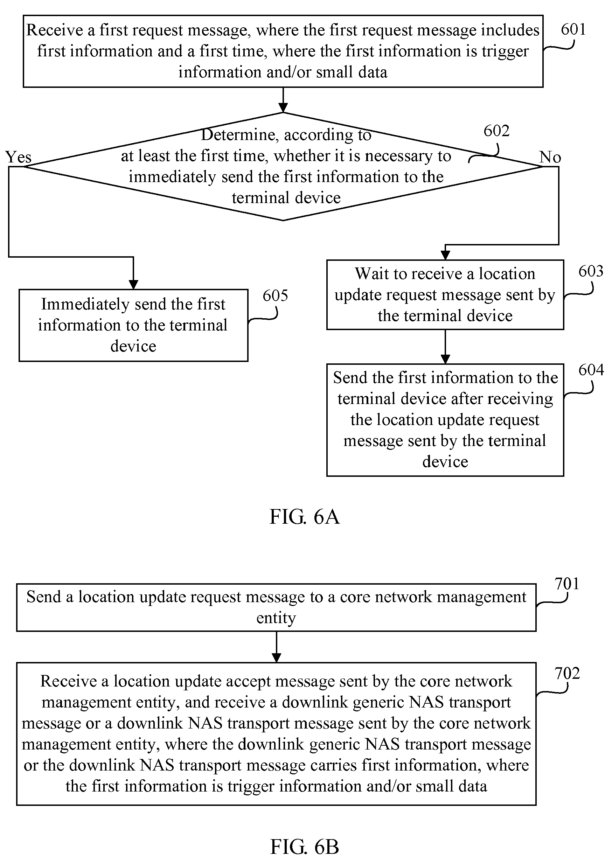

FIG. 6A is a flowchart of a method for transmitting information according to another embodiment of the present invention. As shown in FIG. 6A, the method in this embodiment includes:

Step 601: Receive a first request message, where the first request message includes first information and a first time, where the first information is trigger information and/or small data.

In this embodiment, the first time may be a validity period of the first request message, or is a validity period of the first information, or is a validity period for sending the first information to a terminal device, or is a response time in the first information, where the response time is a validity period in which a terminal device is required to initiate a connection to a core network management entity after receiving the first information.

No matter which one of the foregoing validity periods the first time is, an urgency degree of the first information may be indicated by the first time. For example, if the first time is smaller than a preset time threshold, it indicates that the first information is relatively urgent, and needs to be sent to the terminal device timely; otherwise, it indicates that the first information is not urgent, and does not need to be sent to the terminal device timely.

The foregoing validity periods may be a time segment, for example, 3 minutes or 3 hours, or may also be a time point, for example, a specific hour, minute, or second, in a day of a month of a year, or may be an indication indicating an urgency degree, for example, urgent or not urgent.

In this embodiment, specific values of the validity period and preset time threshold are not limited, which may be determined according to an actual application requirement.

Other description of step 601 is not given herein. For details, reference may be made to step 101.

Step 602: Determine, according to at least the first time, whether it is necessary to immediately send the first information to the terminal device, and if a determining result is no, perform step 603, or if a determining result is yes, perform step 605.

Step 602 is not further described herein. For details, reference may be made to step 202.

Step 603: Wait to receive a location update request message sent by the terminal device, and then perform step 604.

Step 604: Send the first information to the terminal device after receiving the location update request message sent by the terminal device.

Step 605: Immediately send the first information to the terminal device.

The specific implementation manner of step 605 is not further described herein. For details, reference may be made to the methods provided by the embodiments shown in FIG. 1 to FIG. 5.

In this embodiment, after receiving a first request message including first information, a core network management entity determines, according to a first time in the first request message, whether it is necessary to immediately send the first information to a terminal device; and if not, waits for a location update request message sent by the terminal device, and sends the first information to the terminal device after receiving the location update request message, where the first information is trigger information and/or small data. Compared with the technical solution in the prior art, by determining whether it is necessary to immediately send the first information, the core network management entity waits, only when it is unnecessary to immediately send the first information, to receive the location update request message actively sent by the terminal device. The first information is immediately sent to the terminal device when necessary. This not only helps to ensure that the first information can be timely sent to the terminal device and improve the real-time effect of obtaining the first information by the terminal device, but also helps to save the signaling exchange between the core network management entity and the terminal device and save resources.

In an optional implementation manner of this embodiment, step 604 specifically includes: determining whether a capacity of the first information is greater than a capacity threshold, and if a determining result is yes, sending a location update accept message to the terminal device, and sending the first information to the terminal device by using a downlink generic NAS transport message or a downlink NAS transport message, or if a determining result is no, sending a location update accept message to the terminal device, where the location update accept message carries the first information. The location update accept message may be a TAU accept message or an RAU accept message. This implementation manner is not further described herein, and for details, reference may be made to the description of the embodiment shown in FIG. 3. This implementation manner solves the problem of transmitting a large amount data by trigger.

In an optional implementation manner of this embodiment, when the first information is sent to the terminal device, a content type identifier of the first information may be further sent to the terminal device, where the content type identifier of the first information includes a trigger information type identifier and/or a small data type identifier. The core network management entity sends the content type identifier of the first information to the terminal device, so that the terminal device can know content of the received first information, and the terminal device can perform a subsequent operation in a correct processing manner.

FIG. 6B is a flowchart of a method for receiving information according to another embodiment of the present invention. As shown in FIG. 6B, the method in this embodiment includes:
Step 701: Send a location update request message to a core network management entity.
Step 702: Receive a location update accept message sent by the core network management entity, and receive a downlink generic NAS transport message or a downlink NAS transport message sent by the core network management entity, where the downlink generic NAS transport message or the downlink NAS transport message carries first information, where the first information is trigger information and/or small data.

Step 701 and step 702 are not further described herein. For details, reference may be made to the description in the foregoing method embodiments.

In an optional implementation manner of this embodiment, the terminal device receives the content type identifier of the first information sent by the core network management entity when receiving the first information, where the content type identifier of the first information includes a trigger information type identifier and/or a small data type identifier.

In an optional implementation manner of this embodiment, the method in this embodiment further includes: determining a content type of the first information according to the content type identifier of the first information; if determining that content of the first information is small data, directly releasing a NAS signaling connection with the core network management entity, or releasing a NAS signaling connection with the core network management entity after waiting for a specified time; or if determining that content of the first information is trigger information or is trigger information and small data, releasing a NAS signaling connection with the core network management entity after waiting for a specified time, or when determining, according to a response time in the first information, that it is necessary to immediately initiate a connection to the core network device, maintaining a NAS signaling connection with the core network management entity, or when determining, according to a response time in the first information, that it is unnecessary to immediately initiate a connection to the core network management entity, directly releasing a NAS signaling connection with the core network management entity. Two methods are available for the terminal device to release the NAS signaling connection with the core network management entity: The terminal device directly sends a release message to the core network management entity; or the terminal device sends a release request to the core network management entity, and the core network management entity sends a release message. This implementation manner is not further described herein. For details, reference may be made to the description of the embodiment shown in FIG. 5.

As seen above, in this embodiment, a terminal device actively sends a location update request message to a core network management entity, and receives a location update accept message and a downlink generic NAS transport message that are sent by the core network management entity after receiving the location update request message, where the downlink generic NAS transport message carries first information, where the first information is trigger information and/or small data. This solves the transmission problem of large data and improves the real-time effect of obtaining the first information by the terminal device.

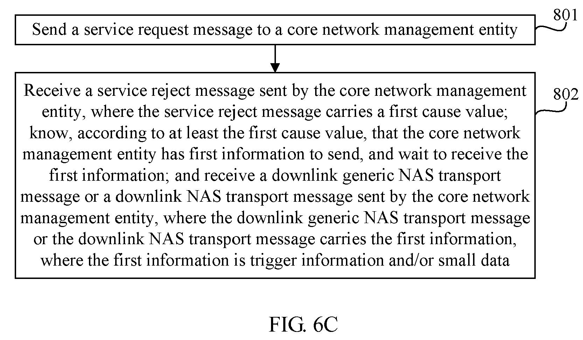

FIG. 6C is a flowchart of a method for receiving information according to another embodiment of the present invention. As shown in FIG. 6C, the method in this embodiment includes:
Step 801: Send a service request message to a core network management entity.
Step 802: Receive a service reject message sent by the core network management entity, where the service reject message carries a first cause value; know, according to at least the first cause value, that the core network management entity has first information to send, and wait to receive the first information; and receive a downlink generic NAS transport message or a downlink NAS transport message sent by the core network management entity, where the downlink generic NAS transport message or the downlink NAS transport message carries the first information, where the first information is trigger information and/or small data.

In an optional implementation manner of this embodiment, the terminal device receives the content type identifier of the first information sent by the core network management entity when receiving the first information, where the content type identifier of the first information includes a trigger information type identifier and/or a small data type identifier.

In an optional implementation manner of this embodiment, the method in this embodiment further includes: determining a content type of the first information according to the content type identifier of the first information; if determining that content of the first information is small data, directly releasing a NAS signaling connection with the core network management entity, or releasing a NAS signaling connection with the core network management entity after waiting for a specified time; or if determining that content of the first information is trigger information or is trigger information and small data, releasing a NAS signaling connection with the core network management entity after waiting for a specified time, or when determining, according to a response time in the first information, that it is necessary to immediately initiate a connection to the core network device, maintaining a NAS signaling connection with the core network management entity, or when determining, according to a response time in the first information, that it is unnecessary to immediately initiate a connection to the core network management entity, directly releasing a NAS signaling connection with the core network management entity. Two methods are available for releasing the NAS signaling connection with the core network management entity: The terminal device directly sends a release message to the core network management entity; or the terminal device sends a release request to the core network management entity, and the core network management entity sends a release message. This implementation manner is not further described herein. For details, reference may be made to the description of the embodiment shown in FIG. 5.

As seen above, in this embodiment, after receiving a paging message sent by a core network management entity, a terminal device sends a service request message to the core network management entity, receives a service reject message carrying a first cause value from the core network management entity, waits for first information sent by the core network entity, and receives a downlink generic NAS transport message or a NAS transport message that is sent by the core network management entity and carries the first information, where the first information is trigger information and/or small data. This solves the transmission problem of large data and improves the real-time effect of obtaining the first information by the terminal device.

Based on the foregoing embodiments, several exemplary implementation manners of the technical solution of the present invention are concluded as follows:

After receiving the first request message, the core network management entity determines, according to the first time carried in the first request message, whether it is necessary to immediately send the first information to the terminal device, that is, determines an urgency degree of the first information:

If a determining result is urgent, the subsequent procedure is: The core network management entity sends a paging message to the terminal device. If the paging message carries indication information, the terminal device sends a TAU/RAU request message to the core network management entity; if the paging message does not carry indication information, the terminal device sends a service request message to the core network management entity. The core network management entity determines whether a total capacity of the first information is greater than a capacity threshold; and if yes, the core network management entity sends a TAU/RAU accept message to the terminal device, and sends the first information to the terminal device by using a downlink generic NAS transport message or a downlink NAS transport message, or the core network management entity sends a service reject message to the terminal device, and sends the first information to the terminal device by using a downlink generic NAS transport message or a downlink NAS transport message, where the service reject message may carry a second cause value, so that the terminal device knows, according to at least the second cause value, that the core network management entity has the first information to send, and waits to receive the first information. The second cause value is used to notify the terminal device that the core network management entity has trigger information and/or small data to send to the terminal, so that the terminal device waits to receive the first information instead of releasing a NAS connection. If the total capacity of the first information is not greater than the capacity threshold, the core network management entity sends a TAU/RAU accept message to the terminal device, and carries the first information by using the TAU/RAU accept message, or the core network management entity sends a service reject message to the terminal device, and carries the first information by using the service reject message. The service reject message may carry a second cause value, where the second cause value is used to notify the terminal that the service reject message carries the first information or the core network management entity has trigger information and/or small data to send to the terminal. For the foregoing two cases, the terminal device may further obtain the first information by parsing, and send an acknowledgement message to the core network management device by using an uplink generic NAS transport message or uplink NAS transport information, so as to notify the core network management entity that the terminal device has received the first information.

If a determining result is not urgent, the subsequent procedure is: The core network management entity receives a TAU/RAU request message actively sent by the terminal device. The core network management entity determines whether the total capacity of the first information is greater than the capacity threshold; and if yes, the core network management entity sends a TAU/RAU accept message to the terminal device, and sends the first information to the terminal device by using a downlink generic NAS transport message. If the total capacity of the first information is not greater than the capacity threshold, the core network management entity sends a TAU/RAU accept message to the terminal device, and carries the first information by using the TAU/RAU accept message.

The following method embodiments further describe the technical solution of the present invention from a perspective of interaction between a terminal device, a core network management entity, and an MTC-IWF.

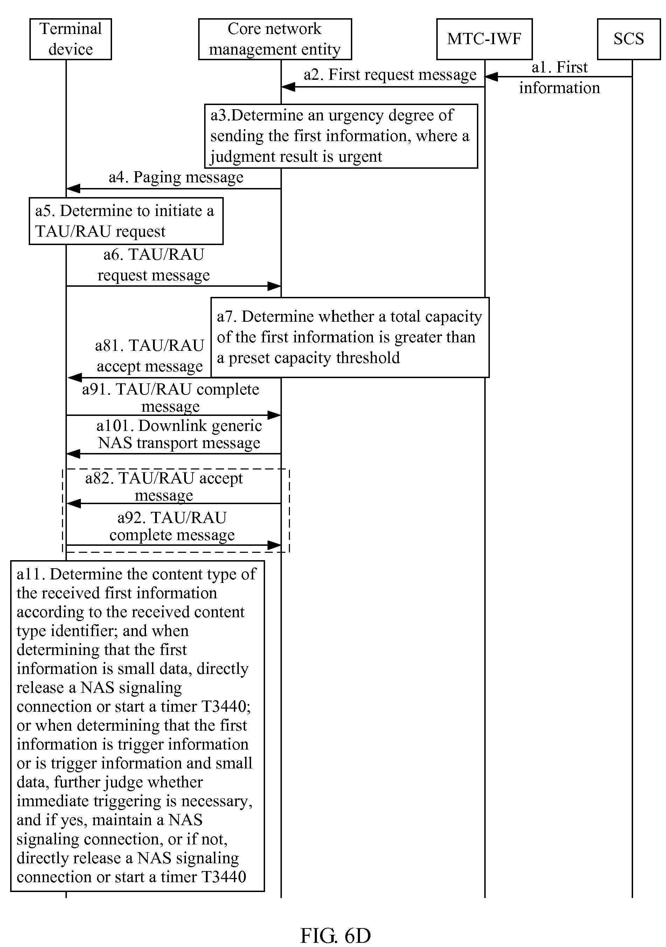

FIG. 6D is a flowchart of a specific implementation manner of a method for transmitting data according to an embodiment of the present invention. As shown in FIG. 6D, the method in this embodiment includes:
Step a1 : An MTC-IWF receives first information sent by an SCS.
   It is noted herein that the first information may be trigger information triggering a terminal device to establish a data connection with the SCS when the SCS has data to send to the terminal device, or may be small data sent by the SCS to a terminal device.
Step a2: The MTC-IWF sends a first request message to a core network management entity, where the first request message includes the first information.
Step a3: The core network management entity determines an urgency degree of sending the first information.
   In this embodiment, using a determining result that the first information is urgent as an example for description, the following steps continue to be performed.
Step a4: The core network management entity sends a paging (paging) message to the terminal device, and carries indication information in the paging message, where the indication information is used to indicate to the terminal device that the core network management entity needs to send the first information.

In this embodiment, the specific value of the indication information may be distinguished according to a content type of the first information. In this way, the indication information may not only indicate that the core network management entity needs to send information to the terminal device, but also indicate the content type of the sent first information, while serving as a content type identifier of the first information.

The specific manner of carrying the indication information in the paging message may be:
Manner 1: A CN Domain field (IE) of the paging message is enhanced for carrying, and specifically, a packet switch (Packet Switch, PS) trigger (English: trigger) or PS data (English: data) value is added. The PS trigger value may not only indicate that the core network management entity needs to send information to the terminal device, but also indicate whether the sent first information is trigger information or is small data or includes both trigger information and small data. The PS data value may not only indicate that the core network management entity needs to send information to the terminal device, but also indicate whether the sent first information is trigger information or is small data or includes both trigger information and small data.
Manner 2: A new field (IE), for example, a paging type (Paging Type) field, is added to the paging message, where the value of the new field may be PS trigger or PS data. This field is transparently transmitted from the core network management entity to the terminal device, and a base station does not perform processing.

Step a5: After receiving the paging message, the terminal device determines, according to the indication information in the paging message, that it is necessary to initiate a TAU/RAU request to the core network management entity.

Step a6: The terminal device sends a TAU/RAU request message to the core network management entity, and indicates a periodic update request in the TAU/RAU request message.

Step a7: After receiving the TAU/RAU request message, the core network management entity determines whether a total capacity of the first information is greater than a capacity threshold. If a determining result is yes, the following steps a81-a101 are performed; or if a determining result is no, the following steps a82-a92 are performed.

Step a81: The core network management entity returns a TAU/RAU Accept (Accept) message to the terminal device.

Step a91: The terminal device returns a TAU/RAU Complete (Complete) message to the core network management entity.

Step a101: The core network management entity sends the first information to the terminal device by using a downlink generic NAS transport message (DOWNLINK GENERIC NAS TRANSPORT message) or a downlink NAS transport message, and carries a content type identifier of the first information in the downlink generic NAS transport message or the downlink NAS transport message.

The core network management entity may carry the content type identifier of the first information by using a generic message container type (Generic message container type) field in the downlink generic NAS transport message or the downlink NAS transport message.

Step a11 continues to be performed after step a101.

Step a82: The core network management entity returns a TAU/RAU Accept message to the terminal device, and carries the first information in the TAU/RAU Accept message, and further carries the content type identifier of the first information in the TAU/RAU Accept message.

Step a92: The terminal device returns a TAU/RAU Complete (Complete) message to the core network management entity.

Step a11 continues to be performed after step a92.

Step a11: The terminal device determines the content type of the received first information according to the content type identifier of the received first information; and when determining that the first information is small data, directly releases a NAS signaling connection or starts a timer T3440; or when determining that the first information is trigger information or is trigger information and small data, further determines whether immediate triggering is necessary, and if yes, maintains a NAS signaling connection, or if not, directly releases a NAS signaling connection or starts a timer T3440. Two methods are available for the terminal device to release the NAS signaling connection with the core network management entity: The terminal device directly sends a release message to the core network management entity; or the terminal device sends a release request to the core network management entity, and the core network management entity sends a release message.

As seen above, this embodiment ensures the real-time effect of data transmission between the SCS and the terminal device, and also solves the problem of transmitting data whose capacity is greater than a capacity threshold.

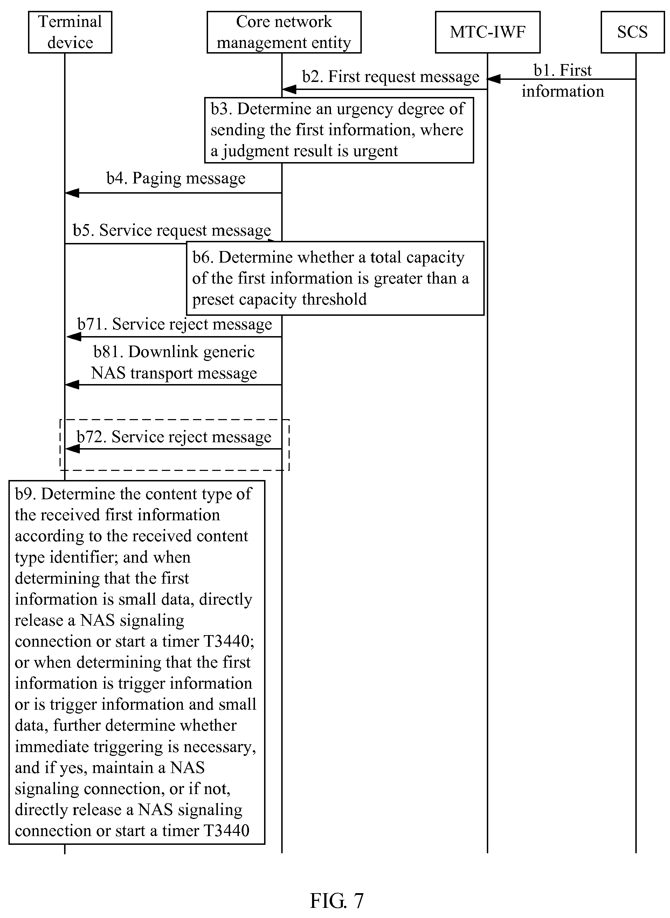

FIG. 7 is a flowchart of a specific implementation manner of a method for transmitting data according to another embodiment of the present invention. As shown in FIG. 7, the method in this embodiment includes:
Step b1: An MTC-IWF receives first information sent by an SCS.

It is noted herein that the first information may be trigger information triggering a terminal device to establish a data connection with the SCS when the SCS has data to send to the terminal device, or may be small data sent by the SCS to a terminal device.

Step b2: The MTC-IWF sends a first request message to a core network management entity, where the first request message includes the first information.

Step b3: The core network management entity determines an urgency degree of sending the first information.

In this embodiment, using a determining result that the first information is urgent as an example for description, the following steps continue to be performed.

Step b4: The core network management entity sends a paging (paging) message to the terminal device.

Step b5: After receiving the paging message, the terminal device sends a service request (service request) message to the core network management entity.

Step b6: After receiving the service request message, the core network management entity determines whether a total capacity of the first information is greater than a capacity threshold. If a determining result is yes, the following steps b71 and b81 are performed; or if a determining result is no, the following step a72 is performed.

Step b71: The core network management entity returns a service reject (Service Reject) message to the terminal device, where the service reject message includes a first cause value, for example, data transfer (Data Transfer) or trigger (trigger) or small data (small data). The first cause value is used to notify the terminal that the core network management entity has trigger information and/or small data to send to the terminal, so that the terminal device waits to receive the first information instead of releasing a NAS connection.

Step b81: The core network management entity sends the first information to the terminal device by using a downlink generic NAS transport message (DOWNLINK GENERIC NAS TRANSPORT message) or a downlink NAS transport message, and carries a content type identifier of the first request message in the downlink generic NAS transport message or the downlink NAS transport message.

The core network management entity may carry the content type identifier of the first information by using a generic message container type (Generic message container type) field in the downlink generic NAS transport message or the downlink NAS transport message.

Step b9 continues to be performed after step b81.

Step b72: The core network management entity returns a service reject message to the terminal device, and carries the first information in the service reject message, and further carries the content type identifier of the first information in the service reject message. The service reject message may further include a second cause value, for example, data transfer (Data Transfer) or trigger (trigger) or small data (small data). The second cause value is used to notify the terminal that the service reject message carries the first information or the core network management entity has trigger information and/or small data to send to the terminal.

Step b9 continues to be performed after step b72.

Step b9: The terminal device determines the content type of the received first information according to the received content type identifier; and when determining that the first information is small data, directly releases a NAS signaling connection or starts a timer T3440; or when determining that the first information is trigger information or is trigger information and small data, further determines whether immediate triggering is necessary, and if yes, maintains a NAS signaling connection, or if not, directly releases a NAS signaling connection or starts a timer T3440. Two methods are available for the terminal device to release the NAS signaling connection with the core network management entity: The terminal device directly sends a release message to the core network management entity; or the terminal device sends a release request to the core network management entity, and the core network management entity sends a release message.

As seen above, this embodiment ensures the real-time effect of data transmission between the SCS and the terminal device, and also solves the problem of transmitting data whose capacity is greater than a capacity threshold.

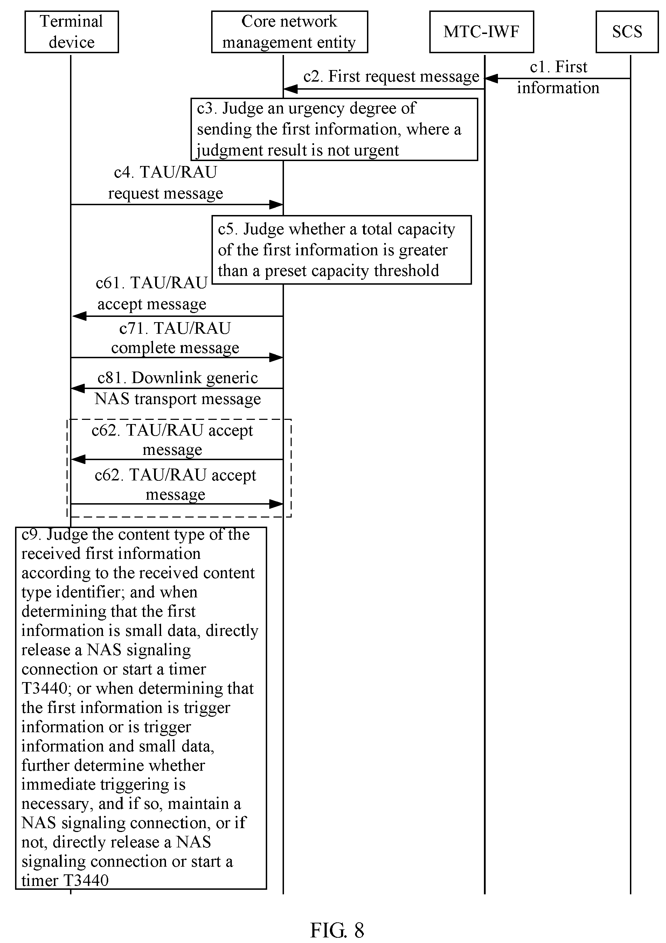

FIG. 8 is a flowchart of a specific implementation manner of a method for transmitting data according to another embodiment of the present invention. As shown in FIG. 8, the method in this embodiment includes:
Step c1: An MTC-IWF receives first information sent by an SCS.

It is noted herein that the first information may be trigger information triggering a terminal device to establish a data connection with the SCS when the SCS has data to send to the terminal device, or may be small data sent by the SCS to a terminal device.

Step c2: The MTC-IWF sends a first request message to a core network management entity, where the first request message includes the first information.

Step c3: The core network management entity determines an urgency degree of sending the first information.

In this embodiment, a determining result that the first information is not urgent is used as an example for description. Accordingly, the core network management entity stores the first information, waits for a TAU/RAU request initiated by the terminal device, and the following steps continue to be performed.

Step c4: The terminal device sends a TAU/RAU request message to the core network management entity.

Step c5: After receiving the TAU/RAU request message, the core network management entity determines whether a total capacity of the first information is greater than a capacity threshold. If a determining result is yes, the following steps c61-c81 are performed; or if a determining result is no, the following steps c62-c72 are performed.

Step c61: The core network management entity returns a TAU/RAU Accept (Accept) message to the terminal device.

Step c71: The terminal device returns a TAU/RAU Complete (Complete) message to the core network management entity.

Step c81: The core network management entity sends the first information to the terminal device by using a downlink generic NAS transport message (DOWNLINK GENERIC NAS TRANSPORT message) or a downlink NAS transport message, and carries a content type identifier of the first information in the downlink generic NAS transport message.

The core network management entity may carry the content type identifier of the first information by using a generic message container type (Generic message container type) field in the downlink generic NAS transport message or the downlink NAS transport message.

Step c9 continues to be performed after step c81.

Step c62: The core network management entity returns a TAU/RAU Accept message to the terminal device, and carries the first information in the TAU/RAU Accept message, and further carries the content type identifier of the first information in the TAU/RAU Accept message.

Step c72: The terminal device returns a TAU/RAU Complete (Complete) message to the core network management entity.

Step c9 continues to be performed after step c72.

Step c9: The terminal device determines the content type of the received first information according to the received content type identifier; when determining that the first information is small data, directly releases a NAS signaling connection or starts a timer T3440; or when determining that the first information is a trigger request message, further determines whether immediate triggering is necessary, and if yes, maintains a NAS signaling connection, or if not, directly releases a NAS signaling connection or starts a timer T3440. Two methods are available for the terminal device to release the NAS signaling connection with the core network management entity: The terminal device directly sends a release message to the core network management entity; or the terminal device sends a release request to the core network management entity, and the core network management entity sends a release message.

As seen above, this embodiment uses a technical solution where data is transmitted to a terminal device when the terminal device actively initiates a TAU/RAU update request if data transmission between an SCS and the terminal device is not urgent. This helps to reduce the interaction between the core network management entity and the terminal device, and helps to save network resources, and also solves the problem of transmitting data whose capacity is greater than a capacity threshold.

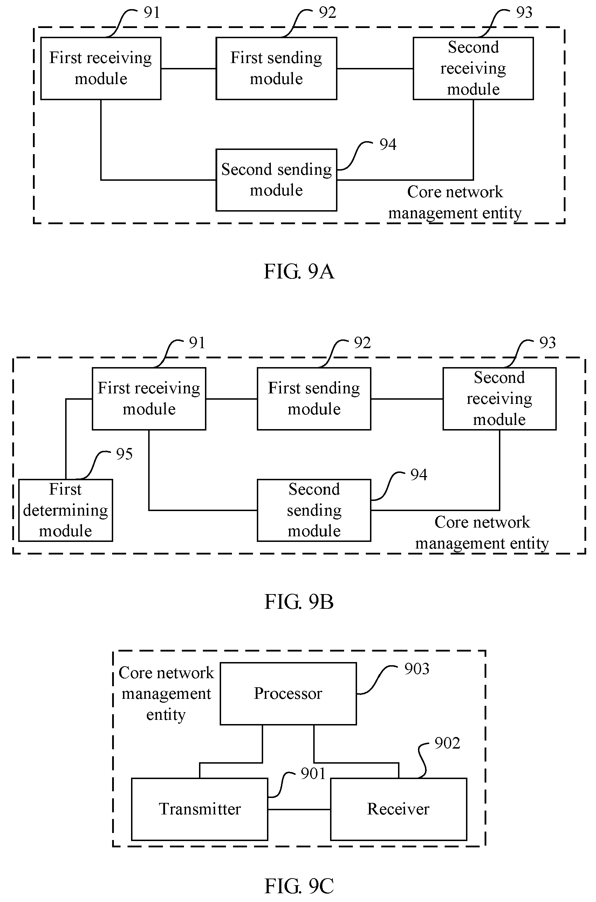

FIG. 9A is a schematic structural diagram of a core network management entity according to an embodiment of the present invention. As shown in FIG. 9A, the core network management entity in this embodiment includes: a first receiving module 91, a first sending module 92, a second receiving module 93, and a second sending module 94.

The first receiving module 91 is configured to receive a first request message, where the first request message includes first information, where the first information is trigger information and/or small data. The first sending module 92 is connected to the first receiving module 91 and configured to send a paging message to a terminal device after the first receiving module 91 receives the first request message. The second receiving module 93 is connected to the first sending module 92, and configured to receive, after the first sending module 92 sends the paging message, a second request message that is sent by the terminal device according to the paging message. The second sending module 94 is connected to the first receiving module 91 and the second receiving module 93, and configured to send the first information received by the first receiving module 91 to the terminal device after the second receiving module 93 receives the second request message.

In an optional implementation manner of this embodiment, the paging message sent by the first sending module 92 carries indication information, so that the terminal device sends the second request message to the core network management entity according to at least the indication information. Optionally, the second request message is a location update request message or a service request message.

In an optional implementation manner of this embodiment, the first request message received by the first receiving module 91 carries a first time, where the first time is a validity period of the first request message, or is a validity period of the first information, or is a validity period for sending the first information to the terminal device, or is a response time in the first information, where the response time is a validity period in which the terminal device is required to initiate a connection to the core network management entity after receiving the first information.

In an optional implementation manner of this embodiment, as shown in FIG. 9B, the core network management entity in this embodiment further includes a first determining module 95. The first determining module 95 is connected to the first receiving module 91, and configured to determine, according to at least the first time received by the first receiving module 91, whether it is necessary to immediately send the first information received by the first receiving module 91 to the terminal device, and if a determining result is yes, trigger the first sending module 92 to send the paging message to the terminal device.

In an optional implementation manner of this embodiment, the second sending module 94 is specifically configured to: determine whether a total capacity of the first information is greater than a capacity threshold, and if a determining result is yes, send a second response message to the terminal device, and send the first information to the terminal device by using a downlink generic NAS transport message or a downlink NAS transport message, or if a determining result is no, send a second response message to the terminal device, where the second response message carries the first information.

In another optional implementation manner of this embodiment, the second sending module 94 is specifically configured to: if the second request message is a location update request message, send the first information to the terminal device by using a location update accept message, or if the second request message is a service request message, send the first information to the terminal device by using a service reject message. If the first information is sent to the terminal device by using a service reject message, the service reject message carries a second cause value, so that the terminal device knows, according to at least the second cause value, that the service reject message carries the first information.

In another optional implementation manner of this embodiment, the second sending module 94 is specifically configured to: if the second request message is a service request message, send a service reject message to the terminal device, and carry a first cause value in the service reject message, so that the terminal device learns, according to at least the first cause value, that the core network management entity has the first information to send to the terminal device; and
the second sending module 94 is specifically configured to send the first information to the terminal device by using a downlink generic NAS transport message or a downlink NAS transport message after the second receiving module 93 receives the second request message.

In an optional implementation manner of this embodiment, the second sending module 94 is further configured to send a content type identifier of the first information to the terminal device when sending the first information to the terminal device, where the content type identifier of the first information includes a trigger information type identifier and/or a small data type identifier.

In an optional implementation manner of this embodiment, the first sending module 92 is specifically configured to extend a core network domain field in the paging message, and carry the indication information in the extended core network domain field; or specifically configured to add a field to the paging message, and carry the indication to the newly added field.

The functional modules of the core network management entity provided by this embodiment may be configured to execute the corresponding procedures in the embodiments shown in FIG. 1 to FIG. 3. The detailed working principles of the modules are not further described. For details, reference may be made to the description of the method embodiments.

The core network management entity provided by this embodiment sends a paging message to a terminal device after receiving a first request message including first information, so that the terminal device sends a second request message timely according to the paging message; and after receiving the second request message, sends the first information in the first request message to the terminal device, where the first information is trigger information and/or small data. Compared with the solution in the prior art where the core network management entity waits for a location update request message actively sent by the terminal device and sends the first information in the first request message to the terminal device after receiving the location update request message, the core network management entity does not need to wait for the location update request message actively sent by the terminal device, and can send the first request message to the terminal device timely, thereby improving the real-time effect of sending information to the terminal device.

FIG. 9C is a schematic structural diagram of a core network entity according to another embodiment of the present invention. As shown in FIG. 9C, the core network entity in this embodiment includes: a transmitter 901, a receiver 902, and a processor 903.

The receiver 902 is configured to receive a first request message, where the first request message includes first information, where the first information is trigger information and/or small data. The transmitter 901 is configured to send a paging message to a terminal device after the receiver 902 receives the first request message. The receiver 902 is further configured to receive, after the transmitter 901 sends the paging message, a second request message that is sent by the terminal device according to the paging message. The transmitter 901 is further configured to send the first information to the terminal device after receiving the second request message.

Optionally, the paging message sent by the transmitter 901 carries indication information, so that the terminal device sends the second request message to the core network management entity according to at least the indication information. The second request message may be a location update request message or a service request message.

Optionally, the transmitter 901 may be specifically configured to extend a core network domain field in the paging message, carry the indication information in the extended core network domain field, and send the paging message to the terminal device. Alternatively, the transmitter 901 may be specifically configured to add a field to the paging message, carry the indication information in the newly added field, and send the paging message to the terminal device.

Optionally, the first request message received by the receiver 902 carries a first time, where the first time is a validity period of the first request message, or is a validity period of the first information, or is a validity period for sending the first information to the terminal device, or is a response time in the first information, where the response time is a validity period in which the terminal device is required to initiate a connection to the core network management entity after receiving the first information.

Based on the foregoing, the processor 903 is configured to determine, according to at least the first time in the first request message received by the receiver 902, whether it is necessary to immediately send the first information to the terminal device, and if a determining result is yes, control the transmitter 901 to send the paging message to the terminal device.

Optionally, the processor 903 is further configured to determine whether a total capacity of the first information in the first request message received by the receiver 902 is greater than a capacity threshold, and if a determining result is yes, control the transmitter 901 to send a second response message to the terminal device, and send the first information to the terminal device by using a downlink generic NAS transport message or a downlink NAS transport message, or if a determining result is no, control the transmitter 901 to send a second response message to the terminal device, where the second response message carries the first information.

Optionally, the transmitter 901 is specifically configured to send the first information to the terminal device by using a location update accept message if the second request message received by the receiver 902 is a location update request message, or send the first information to the terminal device by using a service reject message if the second request message received by the receiver 902 is a service request message. If the second request message is a service request message, the service reject message may further carry a second cause value, so that the terminal device knows, according to at least the second cause value, that the service reject message carries the first information.

Optionally, the transmitter 901 is further configured to send a content type identifier of the first information to the terminal device when sending the first information to the terminal device, where the content type identifier of the first information includes a trigger information type identifier and/or a small data type identifier.

The functional modules of the core network management entity provided by this embodiment may be configured to execute the corresponding procedures in the embodiments shown in FIG. 1 to FIG. 3. The detailed working principles of the modules are not further described. For details, reference may be made to the description of the method embodiments.

The core network management entity provided by this embodiment sends a paging message to a terminal device after receiving a first request message including first information, so that the terminal device sends a second request message timely according to the paging message; and after receiving the second request message, sends the first information in the first request message to the terminal device, where the first information is trigger information and/or small data. Compared with the solution in the prior art where the core network management entity waits for a location update request message actively sent by the terminal device and sends the first information in the first request message to the terminal device after receiving the location update request message, the core network management entity does not need to wait for the location update request message actively sent by the terminal device, and can send the first request message to the terminal device timely, thereby improving the real-time effect of sending information to the terminal device.

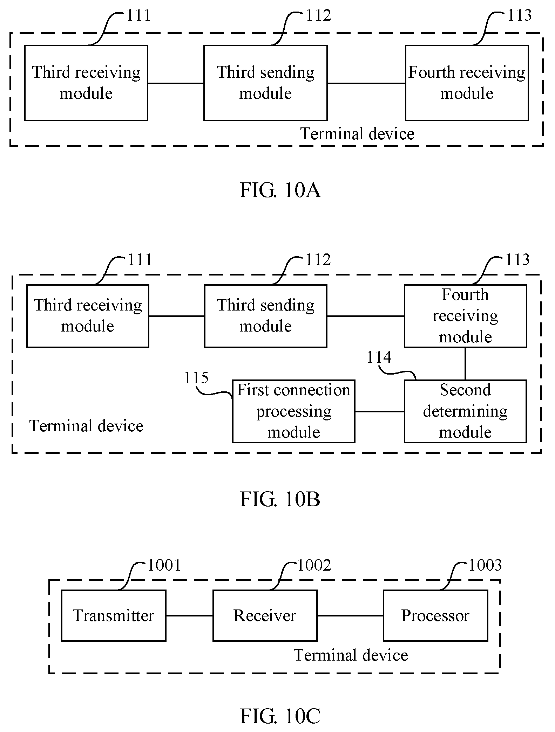

FIG. 10A is a schematic structural diagram of a terminal device according to an embodiment of the present invention. As shown in FIG. 10A, the terminal device in this embodiment includes: a third receiving module 111, a third sending module 112, and a fourth receiving module 113.

The third receiving module 111 is configured to receive a paging message, where the paging message carries indication information. The third sending module 112 is connected to the third receiving module 111, and configured to send a second request message to a core network management entity according to at least the indication information received by the third receiving module 111. The fourth receiving module 113 is connected to the third sending module 112, and configured to receive, after the third sending module 112 sends the second request message, first information sent by the core network management entity, where the first information is trigger information and/or small data.

In an optional implementation manner of this embodiment, the fourth receiving module 113 is specifically configured to receive a second response message sent by the core network management entity, and receive a downlink generic NAS transport message or a downlink NAS transport message sent by the core network management entity, where the downlink generic NAS transport message or the downlink NAS transport message carries the first information. Alternatively, the fourth receiving module 113 is specifically configured to receive a second response message sent by the core network management entity, where the second response message carries the first information.

In an optional implementation manner of this embodiment, the fourth receiving module 113 is further configured to receive a content type identifier of the first information sent by the core network management entity when receiving the first information, where the content type identifier of the first information includes a trigger information type identifier and/or a small data type identifier.

In an optional implementation manner of this embodiment, as shown in FIG. 10B, the terminal device in this embodiment further includes a second determining module 114 and a first connection processing module 115.

The second determining module 114 is connected to the fourth receiving module 113, and configured to determine a content type of the first information according to the content type identifier of the first information received by the fourth receiving module 113. The first connection processing module 115 is connected to the second determining module 114, and configured to: if the second determining module 114 determines that content of the first information is small data, release a NAS signaling connection with the core network management entity directly or after waiting for a specified time; or if the second determining module 114 determines that content of the first information is trigger information or is trigger information and small data, after waiting for a specified time, release a NAS signaling connection with the core network management entity, or when it is determined, according to a response time in the first information, that it is necessary to immediately initiate a connection to the core network device, maintain a NAS signaling connection with the core network management entity, or when it is determined, according to a response time in the first information, that it is unnecessary to immediately initiate a connection to the core network management entity, directly release a NAS signaling connection with the core network management entity. Two methods are available for the terminal device to release the NAS signaling connection with the core network management entity: The terminal device directly sends a release message to the core network management entity; or the terminal device sends a release request to the core network management entity, and the core network management entity sends a release message.

In an optional implementation manner of this embodiment, the second request message may be a location update request message or a service request message.

In an optional implementation manner of this embodiment, the second response message may be a location update accept message or a service reject message.

The functional modules of the terminal device provided by this embodiment may be configured to execute the corresponding procedures in the embodiment shown in FIG. 4 or FIG. 5. The detailed working principles of the modules are not further described. For details, reference may be made to the description of the method embodiments.

The terminal device provided by this embodiment receives a paging message sent by a core network management entity, where the paging message carries indication information, so that the terminal device is instructed to send a second request message to the core network management entity according to at least the indication information; the terminal device can timely send the second request message to the core network management entity according to the indication information, and then receive first information sent by the core network management entity according to the second request message, where the first information is trigger information and/or small data. Compared with the technical solution in the prior art, the terminal device does not need to wait to send a location update request message, and can timely obtain the first information from the core network management entity, thereby improving the real-time effect of obtaining the first information.

FIG. 10C is a schematic structural diagram of a terminal device according to another embodiment of the present invention. As shown in FIG. 10C, the terminal device in this embodiment includes: a transmitter 1001, a receiver 1002, and a processor 1003.

The receiver 1002 is configured to receive a paging message, where the paging message carries indication information. The transmitter 1001 is configured to send a second request message to a core network management entity according to at least the indication information received by the receiver 1002. The receiver 1002 is further configured to receive, after the transmitter 1001 sends the second request message, first information sent by the core network management entity, where the first information is trigger information and/or small data.

Optionally, the receiver 1002 is specifically configured to receive a second response message sent by the core network management entity, and receive a downlink generic NAS transport message or a downlink NAS transport message sent by the core network management entity, where the downlink generic NAS transport message or the downlink NAS transport message carries the first information. Alternatively, the receiver 1002 is specifically configured to receive a second response message sent by the core network management entity, where the second response message carries the first information.

Optionally, the receiver 1002 is further configured to receive a content type identifier of the first information sent by the core network management entity when receiving the first information, where the content type identifier of the first information includes a trigger information type identifier and/or a small data type identifier.

The processor 1003 may be configured to determine a content type of the first information according to the content type identifier of the first information received by the receiver 1002, and if determining that content of the first information is small data, release a NAS signaling connection with the core network management entity directly or after waiting for a specified time; or if determining that content of the first information is trigger information or is trigger information and small data, after waiting for a specified time, release a NAS signaling connection with the core network management entity, or when determining, according to a response time in the first information, that it is necessary to immediately initiate a connection to the core network device, maintain a NAS signaling connection with the core network management entity, or when determining, according to a response time in the first information, that it is unnecessary to immediately initiate a connection to the core network management entity, directly release a NAS signaling connection with the core network management entity. Two methods are available for the terminal device to release the NAS signaling connection with the core network management entity: The terminal device directly sends a release message to the core network management entity; or the terminal device sends a release request to the core network management entity, and the core network management entity sends a release message.

Optionally, the second request message may be a location update request message or a service request message.

Optionally, the second response message may be a location update accept message or a service reject message.

The functional modules of the terminal device provided by this embodiment may be configured to execute the corresponding procedures in the embodiment shown in FIG. 4 or FIG. 5. The detailed working principles of the modules are not further described. For details, reference may be made to the description of the method embodiments.

The terminal device provided by this embodiment receives a paging message sent by a core network management entity, where the paging message carries indication information, so that the terminal device is instructed to send a second request message to the core network management entity according to at least the indication information; the terminal device can timely send the second request message to the core network management entity according to the indication information, and then receive first information sent by the core network management entity according to the second request message, where the first information is trigger information and/or small data. Compared with the technical solution in the prior art, the terminal device does not need to wait to send a location update request message, and can timely obtain the first information from the core network management entity, thereby improving the real-time effect of obtaining the first information.

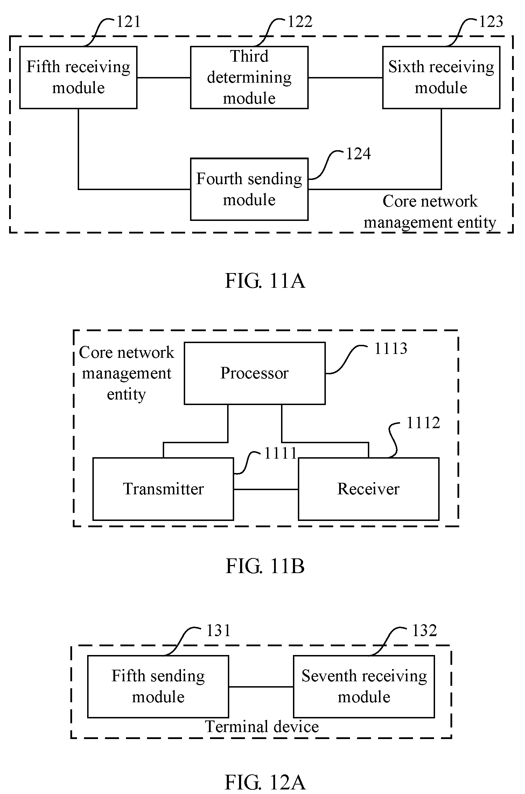

FIG. 11A is a schematic structural diagram of a core network management entity according to another embodiment of the present invention. As shown in FIG. 11A, the core network management entity in this embodiment includes: a fifth receiving module 121, a third determining module 122, a sixth receiving module 123, and a fourth sending module 124.

The fifth receiving module 121 is configured to receive a first request message, where the first request message includes first information and a first time, where the first information is trigger information and/or small data, and the first time is a validity period of the first request message, or is a validity period of the first information, or is a validity period for sending the first information to a terminal device, or is a response time in the first information, where the response time is a validity period in which a terminal device is required to initiate a connection to the core network management entity after receiving the first information.

The third determining module 122 is connected to the fifth receiving module 121, and configured to determine, according to at least the first time received by the fifth receiving module 121, whether it is necessary to immediately send the first information received by the fifth receiving module 121 to the terminal device. The sixth receiving module 123 is connected to the third determining module 122, and configured to: if a determining result of the third determining module 122 is no, wait to receive a location update request message sent by the terminal device. The fourth sending module 124 is connected to the fifth receiving module 121 and sixth receiving module 123, and configured to send the first information received by the fifth receiving module 121 to the terminal device after the sixth receiving module 123 receives the location update request message.

In an optional implementation manner of this embodiment, the fourth sending module 124 is specifically configured to determine whether a capacity of the first information is greater than a capacity threshold, and if a determining result is yes, send a location update accept message to the terminal device, and send the first information to the terminal device by using a downlink generic NAS transport message or a downlink NAS transport message, or if a determining result is no, send a location update accept message to the terminal device, where the location update accept message carries the first information.

In an optional implementation manner of this embodiment, the fourth sending module 124 is further configured to send a content type identifier of the first information to the terminal device when sending the first information to the terminal device, where the content type identifier of the first information includes a trigger information type identifier and/or a small data type identifier.

The functional modules of the core network management entity provided by this embodiment may be configured to execute the corresponding procedure in the embodiment shown in FIG. 6A. The detailed working principles of the modules are not further described. For details, reference may be made to the description of the method embodiment.

After receiving a first request message including first information, the core network management entity provided by this embodiment determines, according to a first time in the first request message, whether it is necessary to immediately send the first information to a terminal device; and if not, waits for a location update request message sent by the terminal device, and sends the first information to the terminal device after receiving the location update request message, where the first information is trigger information and/or small data. Compared with the technical solution in the prior art, by determining whether it is necessary to immediately send the first information, the core network management entity waits, only when it is unnecessary to immediately send the first information, to receive the location update request message actively sent by the terminal device. This helps to ensure that the first information can be timely sent to the terminal device, and improve the real-time effect of obtaining the first information by the terminal device.

FIG. 11B is a schematic structural diagram of a core network management entity according to another embodiment of the present invention. As shown in FIG. 11B, the core network management entity in this embodiment includes: a transmitter 1111, a receiver 1112, and a processor 1113.

The receiver 1112 is configured to receive a first request message, where the first request message includes first information and a first time, where the first information is trigger information and/or small data, and the first time is a validity period of the first request message, or is a validity period of the first information, or is a validity period for sending the first information to a terminal device, or is a response time in the first information, where the response time is a validity period in which a terminal device is required to initiate a connection to the core network management entity after receiving the first information.

The processor 1113 is configured to determine, according to at least the first time in the first request message received by the receiver 1112, whether it is necessary to send the first information in the first request message received by the receiver 1112 to the terminal device, and if a determining result is no, control the receiver 1112 to wait to receive a location update request message sent by the terminal device. The transmitter 1111 is configured to send the first information received by the receiver 1112 to the terminal device after the receiver 1112 receives the location update request message.

The processor 1113 is further configured to determine whether a capacity of the first information is greater than a capacity threshold, and if a determining result is yes, control the transmitter 1111 to send a location update accept message to the terminal device, and send the first information to the terminal device by using a downlink generic NAS transport message or a downlink NAS transport message, or if a determining result is no, control the transmitter 1111 to send a location update accept message to the terminal device, where the location update accept message carries the first information.

Optionally, the transmitter 1111 is further configured to send a content type identifier of the first information to the terminal device when sending the first information to the terminal device, where the content type identifier of the first information includes a trigger information type identifier and/or a small data type identifier.

The functional modules of the core network management entity provided by this embodiment may be configured to execute the corresponding procedure in the embodiment shown in FIG. 6A. The detailed working principles of the modules are not further described. For details, reference may be made to the description of the method embodiment.

After receiving a first request message including first information, the core network management entity provided by this embodiment determines, according to a first time in the first request message, whether it is necessary to immediately send the first information to a terminal device; and if not, waits for a location update request message sent by the terminal device, and sends the first information to the terminal device after receiving the location update request message, where the first information is trigger information and/or small data. Compared with the technical solution in the prior art, by determining whether it is necessary to immediately send the first information, the core network management entity waits, only when it is unnecessary to immediately send the first information, to receive the location update request message actively sent by the terminal device. This helps to ensure that the first information can be timely sent to the terminal device, and improve the real-time effect of obtaining the first information by the terminal device.

FIG. 12A is a schematic structural diagram of a terminal device according to another embodiment of the present invention. As shown in FIG. 12A, the terminal device in this embodiment includes a fifth sending module 131 and a seventh receiving module 132.

The fifth sending module 131 is configured to send a location update request message to a core network management entity. The seventh receiving module 132 is connected to the fifth sending module 131, and configured to receive, after the fifth sending module 131 sends the location update request message, a location update accept message sent by the core network management entity, and receive a downlink generic NAS transport message or a downlink NAS transport message sent by the core network management entity, where the downlink generic NAS transport message or the downlink NAS transport message carries first information, where the first information is trigger information and/or small data.

In an optional implementation manner of this embodiment, the seventh receiving module 132 is further configured to receive a content type identifier of the first information sent by the core network management entity when receiving the first information, where the content type identifier of the first information includes a trigger information type identifier and/or a small data type identifier.

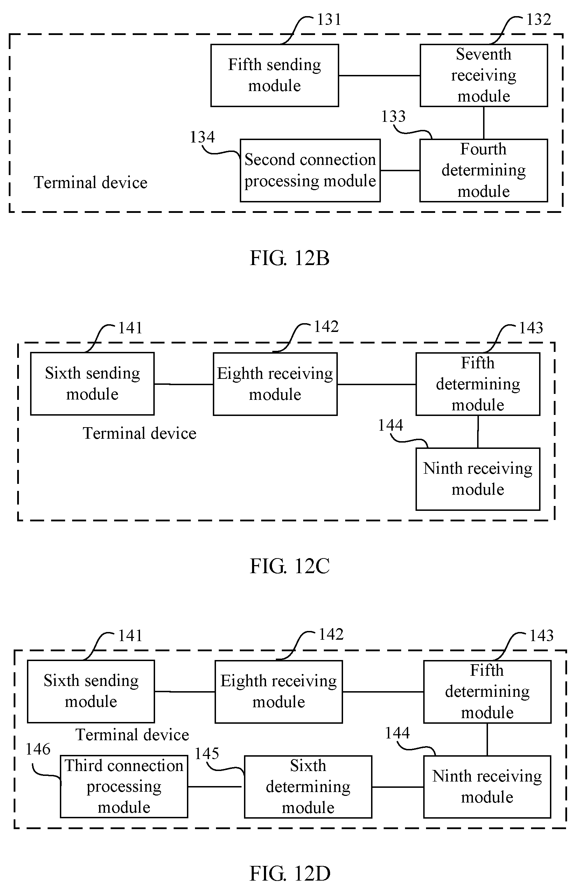

In an optional implementation manner of this embodiment, as shown in FIG. 12B, the terminal device in this embodiment further includes a fourth determining module 133 and a second connection processing module 134.

The fourth determining module 133 is connected to the seventh receiving module 132, and configured to determine, according to the content type identifier of the first information received by the seventh receiving module 132, a content type of the first information received by the seventh receiving module 132. The second connection processing module 134 is connected to the fourth determining module 133, and configured to: if the fourth determining module 133 determines that content of the first information is small data, release a NAS signaling connection with the core network management entity directly or after waiting for a specified time; or if the fourth determining module 133 determines that content of the first information is trigger information or is trigger information and small data, after waiting for a specified time, release a NAS signaling connection with the core network management entity, or when it is determined, according to a response time in the first information, that it is necessary to immediately initiate a connection to the core network device, maintain a NAS signaling connection with the core network management entity, or when it is determined, according to a response time in the first information, that it is unnecessary to immediately initiate a connection to the core network management entity, directly release a NAS signaling connection with the core network management entity. Two methods are available for the terminal device to release the NAS signaling connection with the core network management entity: The terminal device directly sends a release message to the core network management entity; or the terminal device sends a release request to the core network management entity, and the core network management entity sends a release message.

The functional modules of the terminal device provided by this embodiment may be configured to execute the corresponding procedure in the embodiment shown in FIG. 6B. The detailed working principles of the modules are not further described. For details, reference may be made to the description of the method embodiment.

The terminal device provided by this embodiment actively sends a location update request message to a core network management entity, and receives a location update accept message and a downlink generic NAS transport message that are sent by the core network management entity after receiving the location update request message, where the downlink generic NAS transport message carries first information, where the first information is trigger information and/or small data. This solves the transmission problem of large data and improves the real-time effect of obtaining the first information by the terminal device.

FIG. 12C is a schematic structural diagram of a terminal device according to another embodiment of the present invention. As shown in FIG. 12C, the terminal device in this embodiment includes a sixth sending module 141, an eighth receiving module 142, a fifth determining module 143, and a ninth receiving module 144.

The sixth sending module 141 is configured to send a service request message to a core network management entity.

The eighth receiving module 142 is configured to receive, after the sixth sending module 141 sends the service request message, a service reject message sent by the core network management entity, where the service reject message carries a first cause value.

The fifth determining module 143 is configured to determine, according to at least the first cause value carried in the reject message, after the eighth receiving module 142 receives the service reject message, whether it is necessary to wait to receive first information.

The ninth receiving module 144 is configured to receive, when the fifth determining module 143 determines that it is necessary to wait for the first information sent by the core network management entity, a downlink generic NAS transport message or a downlink NAS transport message sent by the core network management entity, where the downlink generic NAS transport message or the downlink NAS transport message carries the first information, where the first information is trigger information and/or small data.

In an optional implementation manner of this embodiment, the ninth receiving module 144 is further configured to receive a content type identifier of the first information sent by the core network management entity when receiving the first information, where the content type identifier of the first information includes a trigger information type identifier and/or a small data type identifier.

In an optional implementation manner of this embodiment, as shown in FIG. 12D, the terminal device in this embodiment further includes a sixth determining module 145 and a third connection processing module 146.

The sixth determining module 145 is connected to the ninth receiving module 144, and configured to determine, according to the content type identifier of the first information received by the ninth receiving module 144, a content type of the first information received by the ninth receiving module 144. The third connection processing module 146 is connected to the sixth determining module 145, and configured to: if the sixth determining module 145 determines that content of the first information is small data, release a NAS signaling connection with the core network management entity directly or after waiting for a specified time; or if the sixth determining module 145 determines that content of the first information is trigger information or is trigger information and small data, after waiting for a specified time, release a NAS signaling connection with the core network management entity, or when it is determined, according to a response time in the first information, that it is necessary to immediately initiate a connection to the core network device, maintain a NAS signaling connection with the core network management entity, or when it is determined, according to a response time in the first information, that it is unnecessary to immediately initiate a connection to the core network management entity, directly release a NAS signaling connection with the core network management entity. Two methods are available for the terminal device to release the NAS signaling connection with the core network management entity: The terminal device directly sends a release message to the core network management entity; or the terminal device sends a release request to the core network management entity, and the core network management entity sends a release message.

The functional modules of the terminal device provided by this embodiment may be configured to execute the corresponding procedure in the embodiment shown in FIG. 6C. The detailed working principles of the modules are not further described. For details, reference may be made to the description of the method embodiment.

After receiving a paging message sent by a core network management entity, the terminal device provided by this embodiment sends a service request message to the core network management entity, receives a service reject message carrying a first cause value from the core network management entity, waits for first information sent by the core network entity, and receives a downlink generic NAS transport message or a NAS transport message that is sent by the core network management entity and carries the first information, where the first information is trigger information and/or small data. This solves the transmission problem of large data and improves the real-time effect of obtaining the first information by the terminal device.

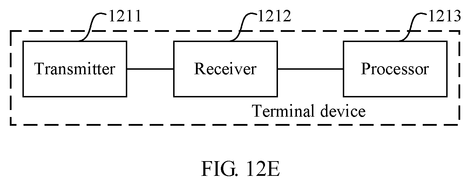

FIG. 12E is a schematic structural diagram of a terminal device according to another embodiment of the present invention. As shown in FIG. 12E, the terminal device in this embodiment includes: a transmitter 1211, a receiver 1212, and a processor 1213.

The transmitter 1211 is configured to send a location update request message to a core network management entity. The receiver 1212 is configured to receive, after the transmitter 1211 sends the location update request message, a location update accept message and a downlink generic NAS transport message that are sent by the core network management entity, where the downlink generic NAS transport message carries first information, where the first information is trigger information and/or small data.

Optionally, the receiver 1212 is further configured to receive a content type identifier of the first information sent by the core network management entity when receiving the first information, where the content type identifier of the first information includes a trigger information type identifier and/or a small data type identifier.

The processor 1213 may be configured to determine, according to the content type identifier of the first information received by the receiver 1212, a content type of the first information received by the receiver 1212, and if determining that content of the first information is small data, release a NAS signaling connection with the core network management entity directly or after waiting for a specified time; or if determining that content of the first information is trigger information or is trigger information and small data, after waiting for a specified time, release a NAS signaling connection with the core network management entity, or when determining, according to a response time in the first information, that it is necessary to immediately initiate a connection to the core network device, maintain a NAS signaling connection with the core network management entity, or when determining, according to a response time in the first information, that it is unnecessary to immediately initiate a connection to the core network management entity, directly release a NAS signaling connection with the core network management entity.

The functional modules of the terminal device provided by this embodiment may be configured to execute the corresponding procedure in the embodiment shown in FIG. 6B. The detailed working principles of the modules are not further described. For details, reference may be made to the description of the method embodiment.

The terminal device provided by this embodiment actively sends a location update request message to a core network management entity, receives a location update accept message that is sent by the core network management entity after receiving the location update request message, and receives a downlink generic NAS transport message or a downlink NAS transport message sent by the core network management entity, where the downlink generic NAS transport message or the downlink NAS transport message carries first information, where the first information is trigger information and/or small data. This solves the transmission problem of large data and improves the real-time effect of obtaining the first information by the terminal device.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of technical solutions to depart from the scope of the technical solutions of the embodiments of the present invention.

## Claims

1. A method for transmitting information, comprising:
receiving (102) a first request message, wherein the first request message comprises first information, wherein the first information is trigger information and/or small data;
sending (102) a paging message to a terminal device;
receiving (103) a second request message that is sent by the terminal device according to the paging message; and
sending (104) the first information to the terminal device after receiving the second request message;
**characterized in that** the sending the first information to the terminal device after receiving the second request message comprises:
if the second request message is a service request message, sending a service reject message to the terminal device, and a first cause value is carried in the service reject message, so that the terminal device learns, according to at least the first cause value, that the core network management entity has the first information to send to the terminal device; and
sending the first information to the terminal device by using a downlink generic NAS transport message or a downlink NAS transport message.

2. The method for transmitting information according to claim 1, wherein the paging message carries indication information, so that the terminal device sends the second request message to a core network management entity according to at least the indication information;
wherein the second request message is a location update request message or a service request message.

3. The method for transmitting information according to any one of claims 1-2, further comprising:
sending a content type identifier of the first information to the terminal device when sending the first information to the terminal device, wherein the content type identifier of the first information comprises a trigger information type identifier and/or a small data type identifier.

4. The method for transmitting information according to claim 1, wherein the sending the first information to the terminal device by using a service reject message if the second request message is a service request message comprises:
carrying a second cause value in the service reject message, so that the terminal device knows, according to at least the second cause value, that the service reject message carries the first information.

5. A method for receiving information, comprising:
receiving (401) a paging message, wherein the paging message carries indication information;
sending (402) a second request message to a core network management entity according to at least the indication information; and
receiving (403) first information sent by the core network management entity, wherein the first information is trigger information and/or small data;
**characterized in that** the receiving the first information comprises:
if the second request message is a service request message, receiving a service reject message, and a first cause value is carried in the service reject message;
determining, according to at least the first cause value, that the core network management entity has the first information to be sent; and
receiving the first information via a downlink generic NAS transport message or a downlink NAS transport message.

6. The method for receiving information according to claim 5, wherein the receiving first information sent by the core network management entity comprises:
receiving a second response message sent by the core network management entity, and receiving a downlink generic NAS transport message or a downlink NAS transport message sent by the core network management entity, wherein the downlink generic NAS transport message or the downlink NAS transport message carries the first information; or
receiving a second response message sent by the core network management entity, wherein the second response message carries the first information.

7. The method for receiving information according to claim 5 or 6, further comprising:
receiving a content type identifier of the first information sent by the core network management entity when receiving the first information, wherein the content type identifier of the first information comprises a trigger information type identifier and/or a small data type identifier.

8. The method for receiving information according to claim 7, wherein after the receiving a content type identifier of the first information sent by the core network management entity when receiving the first information, the method further comprises:
determining a content type of the first information according to the content type identifier of the first information; and
if content of the first information is small data, directly releasing a NAS signaling connection with the core network management entity, or after waiting for a specified time, releasing a NAS signaling connection with the core network management entity;
or if content of the first information is trigger information or is trigger information and small data, after waiting for a specified time, releasing a NAS signaling connection with the core network management entity, or when determining, according to a response time in the first information, that it is necessary to immediately initiate a connection to the core network device, maintaining a NAS signaling connection with the core network management entity, or when determining, according to a response time in the first information, that it is unnecessary to immediately initiate a connection to the core network management entity, directly releasing a NAS signaling connection with the core network management entity.

9. A core network management entity, comprising:
a first receiving module (91), configured to receive a first request message, wherein the first request message comprises first information, wherein the first information is trigger information and/or small data;
a first sending module (92), configured to send a paging message to a terminal device after the first receiving module receives the first request message;
a second receiving module (93), configured to receive, after the first sending module sends the paging message, a second request message that is sent by the terminal device according to the paging message; and
a second sending module (94), configured to send the first information to the terminal device after the second receiving module receives the second request message;
**characterized in that** sending, by the second sending module, the first information to the terminal device after receiving the second request message comprises:
if the second request message is a service request message, sending a service reject message to the terminal device, and a first cause value is carried in the service reject message, so that the terminal device learns, according to at least the first cause value, that the core network management entity has the first information to send to the terminal device; and
sending the first information to the terminal device by using a downlink generic NAS transport message or a downlink NAS transport message.

10. The core network management entity according to claim 9, wherein the paging message carries indication information, so that the terminal device sends the second request message to the core network management entity according to at least the indication information;
wherein the second request message is a location update request message or a service request message.

11. The core network management entity according to claim 9 or 10, wherein the second sending module is specifically configured to send the first information to the terminal device by using a location update accept message if the second request message is a location update request message, or send the first information to the terminal device by using a service reject message if the second request message is a service request message.

12. A terminal device, comprising:
a third receiving module (111), configured to receive a paging message, wherein the paging message carries indication information;
a third sending module (112), configured to send a second request message to a core network management entity according to at least the indication information received by the third receiving module; and
a fourth receiving module (113), configured to receive, after the third sending module sends the second request message, first information sent by the core network management entity, wherein the first information is trigger information and/or small data;
**characterized in that** the receiving, by the fourth receiving module, the first information comprises:
if the second request message is a service request message, receiving a service reject message, and a first cause value is carried in the service reject message;
determining, according to at least the first cause value, that the core network management entity has the first information to be sent; and
receiving the first information via a downlink generic NAS transport message or a downlink NAS transport message.

13. The terminal device according to claim 12, wherein the fourth receiving module is specifically configured to receive a second response message sent by the core network management entity, and receive a downlink generic NAS transport message or a downlink NAS transport message sent by the core network management entity, wherein the downlink generic NAS transport message or the downlink NAS transport message carries the first information; or specifically configured to receive a second response message sent by the core network management entity, wherein the second response message carries the first information.

## Patentansprüche

1. Verfahren zum Übertragen von Informationen, das Folgendes umfasst:
Empfangen (102) einer ersten Anforderungsnachricht, wobei die erste Anforderungsnachricht erste Informationen umfasst, wobei die ersten Informationen Auslöse-Informationen und/oder geringe Daten sind;
Senden (102) einer Funkrufnachricht an eine Endeinrichtung;
Empfangen (103) einer zweiten Anforderungsnachricht, die durch die Endeinrichtung entsprechend der Funkrufnachricht gesendet wird; und
Senden (104) der ersten Informationen an die Endeinrichtung nach dem Empfangen der zweiten Anforderungsnachricht;
**dadurch gekennzeichnet, dass** das Senden der ersten Informationen an die Endeinrichtung nach dem Empfangen der zweiten Anforderungsnachricht Folgendes umfasst:
falls die zweite Anforderungsnachricht eine Dienstanforderungsnachricht ist, Senden einer Dienstablehnungsnachricht an die Endeinrichtung, und ein erster Ursachenwert wird in der Dienstablehnungsnachricht geführt, sodass die Endeinrichtung entsprechend mindestens dem ersten Ursachenwert erfährt, dass die Kernnetzverwaltungskomponente über die ersten Informationen, die an die Endeinrichtung zu senden sind, verfügt; und
Senden der ersten Informationen an die Endeinrichtung durch Verwendung einer generischen Abwärtsverbindung-NAS-Transportnachricht oder einer Abwärtsverbindung-NAS-Transportnachricht.

2. Verfahren zum Übertragen von Informationen nach Anspruch 1, wobei die Funkrufnachricht Angabe-Informationen führt, sodass die Endeinrichtung die zweite Anforderungsnachricht entsprechend mindestens den Angabe-Informationen an eine Kernnetzverwaltungskomponente sendet;
wobei die zweite Anforderungsnachricht eine Standortaktualisierungsanforderungsnachricht oder eine Dienstanforderungsnachricht ist.

3. Verfahren zum Übertragen von Informationen nach einem der Ansprüche 1-2, das ferner Folgendes umfasst:
Senden eines Inhaltstypbezeichners der ersten Informationen an die Endeinrichtung beim Senden der ersten Informationen an die Endeinrichtung, wobei der Inhaltstypbezeichner der ersten Informationen einen Bezeichner des Typs von Auslöse-Informationen und/oder einen Bezeichner des Typs von geringen Daten umfasst.

4. Verfahren zum Übertragen von Informationen nach Anspruch 1, wobei das Senden der ersten Informationen an die Endeinrichtung durch Verwendung einer Dienstablehnungsnachricht, falls die zweite Anforderungsnachricht eine Dienstanforderungsnachricht ist, Folgendes umfasst:
Führen eines zweiten Ursachenwerts in der Dienstablehnungsnachricht, sodass die Endeinrichtung entsprechend mindestens dem zweiten Ursachenwert weiß, dass die Dienstablehnungsnachricht die ersten Informationen führt.

5. Verfahren zum Empfangen von Informationen, das Folgendes umfasst:
Empfangen (401) einer Funkrufnachricht, wobei die Funkrufnachricht Angabe-Informationen führt;
Senden (402) einer zweiten Anforderungsnachricht an eine Kernnetzverwaltungskomponente entsprechend mindestens den Angabe-Informationen; und
Empfangen (403) erster Informationen, die durch die Kernnetzverwaltungskomponente gesendet werden, wobei die ersten Informationen Auslöse-Informationen und/oder geringe Daten sind;
**dadurch gekennzeichnet, dass** das Empfangen der ersten Informationen Folgendes umfasst:
falls die zweite Anforderungsnachricht eine Dienstanforderungsnachricht ist, Empfangen einer Dienstablehnungsnachricht, und ein erster Ursachenwert wird in der Dienstablehnungsnachricht geführt;
Ermitteln entsprechend mindestens dem ersten Ursachenwert, dass die Kernnetzverwaltungskomponente über die ersten Informationen, die zu senden sind, verfügt; und
Empfangen der ersten Informationen über eine generische Abwärtsverbindung-NAS-Transportnachricht oder eine Abwärtsverbindung-NAS-Transportnachricht.

6. Verfahren zum Empfangen von Informationen nach Anspruch 5, wobei das Empfangen erster Informationen, die durch die Kernnetzverwaltungskomponente gesendet werden, Folgendes umfasst:
Empfangen einer zweiten Antwortnachricht, die durch die Kernnetzverwaltungskomponente gesendet wird, und Empfangen einer generischen Abwärtsverbindung-NAS-Transportnachricht oder einer Abwärtsverbindung-NAS-Transportnachricht, die durch die Kernnetzverwaltungskomponente gesendet wird, wobei die generische Abwärtsverbindung-NAS-Transportnachricht oder die Abwärtsverbindung-NAS-Transportnachricht die ersten Informationen führt; oder Empfangen einer zweiten Antwortnachricht, die durch die Kernnetzverwaltungskomponente gesendet wird, wobei die zweite Antwortnachricht die ersten Informationen führt.

7. Verfahren zum Empfangen von Informationen nach Anspruch 5 oder 6, das ferner Folgendes umfasst:
Empfangen eines Inhaltstypbezeichners der ersten Informationen, die durch die Kernnetzverwaltungskomponente gesendet werden, beim Empfangen der ersten Informationen, wobei der Inhaltstypbezeichner der ersten Informationen einen Bezeichner des Typs von Auslöse-Informationen und/oder einen Bezeichner des Typs von geringen Daten umfasst.

8. Verfahren zum Empfangen von Informationen nach Anspruch 7, wobei das Verfahren nach dem Empfangen eines Inhaltstypbezeichners der ersten Informationen, die durch die Kernnetzverwaltungskomponente gesendet werden, beim Empfangen der ersten Informationen ferner Folgendes umfasst:
Ermitteln eines Inhaltstyps der ersten Informationen entsprechend dem Inhaltstypbezeichner der ersten Informationen; und
falls der Inhalt der ersten Informationen geringe Daten sind, direktes Abbauen einer NAS-Signalisierungsverbindung zur Kernnetzverwaltungskomponente oder, nachdem eine festgelegte Zeit lang gewartet worden ist, Abbauen einer NAS-Signalisierungsverbindung zur Kernnetzverwaltungskomponente;
oder, falls der Inhalt der ersten Informationen Auslöse-Informationen sind oder Auslöse-Informationen und geringe Daten sind, nachdem eine festgelegte Zeit lang gewartet worden ist, Abbauen einer NAS-Signalisierungsverbindung zur Kernnetzverwaltungskomponente oder, wenn entsprechend einer Antwortzeit in den ersten Informationen ermittelt wird, dass es notwendig ist, sofort eine Verbindung zur Kernnetzeinrichtung zu initiieren, Aufrechterhalten einer NAS-Signalisierungsverbindung zur Kernnetzverwaltungskomponente oder, wenn entsprechend einer Antwortzeit in den ersten Informationen ermittelt wird, dass es nicht notwendig ist, sofort eine Verbindung zur Kernnetzverwaltungskomponente zu initiieren, direktes Abbauen einer NAS-Signalisierungsverbindung zur Kernnetzverwaltungskomponente.

9. Kernnetzverwaltungskomponente, die Folgendes umfasst:
ein erstes Empfangsmodul (91), das konfiguriert ist, um eine erste Anforderungsnachricht zu empfangen, wobei die erste Anforderungsnachricht erste Informationen umfasst, wobei die ersten Informationen Auslöse-Informationen und/oder geringe Daten sind;
ein erstes Sendemodul (92), das konfiguriert ist, um eine Funkrufnachricht an eine Endeinrichtung zu senden, nachdem das erste Empfangsmodul die erste Anforderungsnachricht empfangen hat;
ein zweites Empfangsmodul (93), das konfiguriert ist, um eine zweite Anforderungsnachricht, die durch die Endeinrichtung entsprechend der Funkrufnachricht gesendet wird, zu empfangen, nachdem das erste Sendemodul die Funkrufnachricht gesendet hat; und
ein zweites Sendemodul (94), das konfiguriert ist, um die ersten Informationen an die Endeinrichtung zu senden, nachdem das zweite Empfangsmodul die zweite Anforderungsnachricht empfangen hat;
**dadurch gekennzeichnet, dass** das Senden der ersten Informationen an die Endeinrichtung durch das zweite Sendemodul nach dem Empfangen der zweiten Anforderungsnachricht Folgendes umfasst:
falls die zweite Anforderungsnachricht eine Dienstanforderungsnachricht ist, Senden einer Dienstablehnungsnachricht an die Endeinrichtung, und ein erster Ursachenwert wird in der Dienstablehnungsnachricht geführt, sodass die Endeinrichtung entsprechend mindestens dem ersten Ursachenwert erfährt, dass die Kernnetzverwaltungskomponente über die ersten Informationen, die an die Endeinrichtung zu senden sind, verfügt; und
Senden der ersten Informationen an die Endeinrichtung durch Verwendung einer generischen Abwärtsverbindung-NAS-Transportnachricht oder einer Abwärtsverbindung-NAS-Transportnachricht.

10. Kernnetzverwaltungskomponente nach Anspruch 9, wobei die Funkrufnachricht Angabe-Informationen führt, sodass die Endeinrichtung die zweite Anforderungsnachricht entsprechend mindestens den Angabe-Informationen an die Kernnetzverwaltungskomponente sendet;
wobei die zweite Anforderungsnachricht eine Standortaktualisierungsanforderungsnachricht oder eine Dienstanforderungsnachricht ist.

11. Kernnetzverwaltungskomponente nach Anspruch 9 oder 10, wobei das zweite Sendemodul speziell konfiguriert ist, um die ersten Informationen an die Endeinrichtung zu senden, indem es eine Standortaktualisierungsannahmenachricht verwendet, falls die zweite Anforderungsnachricht eine Standortaktualisierungsanforderungsnachricht ist, oder die ersten Informationen an die Endeinrichtung zu senden, indem es eine Dienstablehnungsnachricht verwendet, falls die zweite Anforderungsnachricht eine Dienstanforderungsnachricht ist.

12. Endeinrichtung, die Folgendes umfasst:
ein drittes Empfangsmodul (111), das konfiguriert ist, um eine Funkrufnachricht zu empfangen, wobei die Funkrufnachricht Angabe-Informationen führt;
ein drittes Sendemodul (112), das konfiguriert ist, um eine zweite Anforderungsnachricht an eine Kernnetzverwaltungskomponente entsprechend mindestens den Angabe-Informationen, die durch das dritte Empfangsmodul empfangen werden, zu senden; und
ein viertes Empfangsmodul (113), das konfiguriert ist, um erste Informationen, die durch die Kernnetzverwaltungskomponente gesendet werden, zu empfangen, nachdem das dritte Sendemodul die zweite Anforderungsnachricht gesendet hat, wobei die ersten Informationen Auslöse-Informationen und/oder geringe Daten sind; **dadurch gekennzeichnet, dass** das Empfangen der ersten Informationen durch das vierte Empfangsmodul Folgendes umfasst:
falls die zweite Anforderungsnachricht eine Dienstanforderungsnachricht ist, Empfangen einer Dienstablehnungsnachricht, und ein erster Ursachenwert wird in der Dienstablehnungsnachricht geführt;
Ermitteln entsprechend mindestens dem ersten Ursachenwert, dass die Kernnetzverwaltungskomponente über die ersten Informationen, die zu senden sind, verfügt; und
Empfangen der ersten Informationen über eine generische Abwärtsverbindung-NAS-Transportnachricht oder eine Abwärtsverbindung-NAS-Transportnachricht.

13. Endeinrichtung nach Anspruch 12, wobei das vierte Empfangsmodul speziell konfiguriert ist, um eine zweite Antwortnachricht, die durch die Kernnetzverwaltungskomponente gesendet wird, zu empfangen und eine generische Abwärtsverbindung-NAS-Transportnachricht oder eine Abwärtsverbindung-NAS-Transportnachricht, die durch die Kernnetzverwaltungskomponente gesendet wird, zu empfangen, wobei die generische Abwärtsverbindung-NAS-Transportnachricht oder die Abwärtsverbindung-NAS-Transportnachricht die ersten Informationen führt; oder speziell konfiguriert ist, um eine zweite Antwortnachricht, die durch die Kernnetzverwaltungskomponente gesendet wird, zu empfangen, wobei die zweite Antwortnachricht die ersten Informationen führt.

## Revendications

1. Procédé permettant de transmettre des informations, comprenant les étapes suivantes :
recevoir (102) un premier message de requête, le premier message de requête comportant des premières informations, les premières informations étant des informations de déclenchement et/ou des données de petite taille ;
envoyer (102) un message de radio messagerie à un dispositif terminal ;
recevoir (103) un deuxième message de requête qui est envoyé par le dispositif terminal selon le message de radiomessagerie ; et
envoyer (104) les premières informations au dispositif terminal après avoir reçu le deuxième message de requête ;
**caractérisé en ce que** l'étape consistant à envoyer les premières informations au dispositif terminal après avoir reçu le deuxième message de requête comprend :
si le deuxième message de requête est un message de requête de service, envoyer un message de rejet de service au dispositif terminal, et une première valeur de cause est incluse dans le message de rejet de service, pour que le dispositif terminal apprenne, selon au moins la première valeur de cause, que l'entité de gestion de réseau d'infrastructure a les premières informations à envoyer au dispositif terminal ; et
envoyer les premières informations au dispositif terminal en utilisant un message de transport NAS générique de liaison descendante ou un message de transport NAS de liaison descendante.

2. Procédé permettant de transmettre des informations selon la revendication 1, dans lequel le message de radiomessagerie contient des informations d'indication, pour que le dispositif terminal envoie le deuxième message de requête à une entité de gestion de réseau d'infrastructure selon au moins les informations d'indication ;
le deuxième message de requête étant un message de requête de mise à jour d'emplacement ou un message de requête de service.

3. Procédé permettant de transmettre des informations selon l'une quelconque des revendications 1-2, comprenant en outre l'étape suivante :
envoyer un identifiant de type de contenu des premières informations au dispositif terminal lors de l'envoi des premières informations au dispositif terminal, l'identifiant de type de contenu des premières informations comportant un identifiant de type d'informations de déclenchement et/ou un identifiant de type de données de petite taille.

4. Procédé permettant de transmettre des informations selon la revendication 1, dans lequel l'étape consistant à envoyer les premières informations au dispositif terminal en utilisant un message de rejet de service si le deuxième message de requête est un message de requête de service comprend :
inclure une deuxième valeur de cause dans le message de rejet de service, afin que le dispositif terminal sache, selon au moins la deuxième valeur de cause, que le message de rejet de service contient les premières informations.

5. Procédé permettant de recevoir des informations, comprenant les étapes suivantes :
recevoir (401) un message de radiomessagerie, dans lequel le message de radiomessagerie contient des informations d'indication ;
envoyer (402) un deuxième message de requête à une entité de gestion de réseau d'infrastructure selon au moins les informations d'indication ; et
recevoir (403) des premières informations envoyées par l'entité de gestion de réseau d'infrastructure, les premières informations étant des informations de déclenchement et/ou des données de petite taille ;
**caractérisé en ce que** l'étape consistant à recevoir les premières informations comprend :
si le deuxième message de requête est un message de requête de service, recevoir un message de rejet de service, et une première valeur de cause est incluse dans le message de rejet de service ;
déterminer, selon au moins la première valeur de cause, que l'entité de gestion de réseau d'infrastructure a les premières informations à envoyer ; et
recevoir les premières informations par l'intermédiaire d'un message de transport NAS générique de liaison descendante ou d'un message de transport NAS de liaison descendante.

6. Procédé permettant de recevoir des informations selon la revendication 5, dans lequel l'étape consistant à recevoir des premières informations envoyées par l'entité de gestion de réseau d'infrastructure comprend :
recevoir un deuxième message de réponse envoyé par l'entité de gestion de réseau d'infrastructure, et recevoir un message de transport NAS générique de liaison descendante ou un message de transport NAS de liaison descendante envoyés par l'entité de gestion de réseau d'infrastructure, le message de transport NAS générique de liaison descendante ou le message de transport NAS de liaison descendante contenant les premières informations ; ou
recevoir un deuxième message de réponse envoyé par l'entité de gestion de réseau d'infrastructure, le deuxième message de réponse contenant les premières informations.

7. Procédé permettant de recevoir des informations selon la revendication 5 ou 6, comprenant en outre l'étape suivante :
recevoir un identifiant de type de contenu des premières informations envoyées par l'entité de gestion de réseau d'infrastructure lors de la réception des premières informations, l'identifiant de type de contenu des premières informations comportant un identifiant de type d'informations de déclenchement et/ou un identifiant de type de données de petite taille.

8. Procédé permettant de recevoir des informations selon la revendication 7 dans lequel, après l'étape consistant à recevoir un identifiant de type de contenu des premières informations envoyées par l'entité de gestion de réseau d'infrastructure lors de la réception des premières informations, le procédé comprend en outre :
déterminer un type de contenu des premières informations selon l'identifiant de type de contenu des premières informations ; et
si le contenu des premières informations comporte des données de petite taille, libérer directement une connexion de signalisation NAS avec l'entité de gestion de réseau d'infrastructure, ou après avoir attendu pendant un temps spécifié, libérer une connexion de signalisation NAS avec l'entité de gestion de réseau d'infrastructure ;
ou si le contenu des premières informations comporte des informations de déclenchement ou comporte des informations de déclenchement et des données de petite taille, après avoir attendu pendant un temps spécifié, libérer une connexion de signalisation NAS avec l'entité de gestion de réseau d'infrastructure, ou lors de la détermination, selon un temps de réponse dans les premières informations, qu'il est nécessaire d'initier immédiatement une connexion au dispositif de réseau d'infrastructure, maintenir une connexion de signalisation NAS avec l'entité de gestion de réseau d'infrastructure, ou lors de la détermination, selon un temps de réponse dans les premières informations, qu'il est inutile d'initier immédiatement une connexion avec l'entité de gestion de réseau d'infrastructure, libérer directement une connexion de signalisation NAS avec l'entité de gestion de réseau d'infrastructure.

9. Entité de gestion de réseau d'infrastructure, comprenant :
un premier module de réception (91), configuré pour recevoir un premier message de requête, le premier message de requête comportant des premières informations, les premières informations étant des informations de déclenchement et/ou des données de petite taille ;
un premier module d'envoi (92), configuré pour envoyer un message de radiomessagerie à un dispositif terminal après que le premier module de réception a reçu le premier message de requête ;
un deuxième module de réception (93), configuré pour recevoir, après que le premier module d'envoi a envoyé le message de radiomessagerie, un deuxième message de requête qui est envoyé par le dispositif terminal selon le message de radiomessagerie ; et
un deuxième module d'envoi (94), configuré pour envoyer les premières informations au dispositif terminal après que le deuxième module de réception a reçu le deuxième message de requête ;
**caractérisé en ce que** l'étape consistant à envoyer, par le deuxième module d'envoi, les premières informations au dispositif terminal après avoir reçu le deuxième message de requête comprend :
si le deuxième message de requête est un message de requête de service, envoyer un message de rejet de service au dispositif terminal, et une première valeur de cause est incluse dans le message de rejet de service, afin que le dispositif terminal apprenne, selon au moins la première valeur de cause, que l'entité de gestion de réseau d'infrastructure a les premières informations à envoyer au dispositif terminal ; et envoyer les premières informations au dispositif terminal en utilisant un message de transport NAS générique de liaison descendante ou un message de transport NAS de liaison descendante.

10. Entité de gestion de réseau d'infrastructure selon la revendication 9, dans laquelle le message de radiomessagerie contient des informations d'indication, pour que le dispositif terminal envoie le deuxième message de requête à l'entité de gestion de réseau d'infrastructure selon au moins les informations d'indication ;
le deuxième message de requête étant un message de requête de mise à jour d'emplacement ou un message de requête de service.

11. Entité de gestion de réseau d'infrastructure selon la revendication 9 ou 10, dans laquelle le deuxième module d'envoi est configuré spécifiquement pour envoyer les premières informations au dispositif terminal en utilisant un message d'acceptation de mise à jour d'emplacement si le deuxième message de requête est un message de requête de mise à jour d'emplacement, ou envoyer les premières informations au dispositif terminal en utilisant un message de rejet de service si le deuxième message de requête est un message de requête de service.

12. Dispositif terminal, comprenant :
un troisième module de réception (111), configuré pour recevoir un message de radiomessagerie, le message de radiomessagerie contenant des informations d'indication ;
un troisième module d'envoi (112), configuré pour envoyer un deuxième message de requête à une entité de gestion de réseau d'infrastructure selon au moins les informations d'indication reçues par le troisième module de réception ; et
un quatrième module de réception (113), configuré pour recevoir, après que le troisième module d'envoi a envoyé le deuxième message de requête, des premières informations envoyées par l'entité de gestion de réseau d'infrastructure, les premières informations étant des informations de déclenchement et/ou des données de petite taille ;
**caractérisé en ce que** l'étape consistant à recevoir, par le quatrième module de réception, les premières informations comprend :
si le deuxième message de requête est un message de requête de service, recevoir un message de rejet de service, et une première valeur de cause est incluse dans le message de rejet de service ;
déterminer, selon au moins la première valeur de cause, que l'entité de gestion de réseau d'infrastructure a les premières informations à envoyer ; et
recevoir les premières informations par l'intermédiaire d'un message de transport NAS générique de liaison descendante ou d'un message de transport NAS de liaison descendante.

13. Dispositif terminal selon la revendication 12, dans lequel le quatrième module de réception est configuré spécifiquement pour recevoir un deuxième message de réponse envoyé par l'entité de gestion de réseau d'infrastructure, et recevoir un message de transport NAS générique de liaison descendante ou un message de transport NAS de liaison descendante envoyé par l'entité de gestion de réseau d'infrastructure, le message de transport NAS générique de liaison descendante ou le message de transport NAS de liaison descendante contenant les premières informations ; ou configuré spécifiquement pour recevoir un deuxième message de réponse envoyé par l'entité de gestion de réseau d'infrastructure, le deuxième message de réponse contenant les premières informations.
